# EUROPEAN PATENT SPECIFICATION

(11) **EP 4 138 462 B1**
(45) Date of publication and mention of the grant of the patent: **27.05.2026**
(21) Application number: 21803860.2
(22) Date of filing: 07.05.2021
(51) Int. Cl.: H04W 84/18, H04W 12/08, H04W 12/33, H04W 12/50, H04W 8/00

(54) **INFORMATION SHARING METHOD, ELECTRONIC DEVICES AND SYSTEM**
VERFAHREN ZUR GEMEINSAMEN INFORMATIONSNUTZUNG, ELEKTRONISCHE VORRICHTUNGEN UND SYSTEM
PROCÉDÉ DE PARTAGE D'INFORMATIONS, DISPOSITIFS ÉLECTRONIQUES ET SYSTÈME

(30) Priority: 14.05.2020 CN 202010407526; 10.10.2020 CN 202011080169
(43) Date of publication of application: 22.02.2023
(73) Proprietor: Huawei Technologies Co., Ltd., Longgang Shenzhen, Guangdong 518129 (CN)
(72) Inventor: PENG, Bin, Shenzhen, Guangdong 518129 (CN)
(74) Representative: Gill Jennings & Every LLP
(86) International application number: PCT/CN2021/092077
(87) International publication number: WO 2021/227942

(56) References cited:
- CN-A- 108 738 003
- CN-A- 110 611 905
- CN-A- 110 611 905
- US-A1- 2013 072 119
- US-A1- 2016 360 341
- US-A1- 2018 167 373
- US-A1- 2019 191 304
- US-A1- 2022 159 471
- HUSSAIN SYED RAFIUL ET AL: "Secure Seamless Bluetooth Low Energy Connection Migration for Unmodified IoT Devices", vol. 17, no. 4, 1 April 2018 (2018-04-01), US, pages 927 - 944, XP055777851, ISSN: 1536-1233, Retrieved from the Internet <URL:https://ieeexplore.ieee.org/stampPDF/getPDF.jsp?tp=&arnumber=8011489&ref=aHR0cHM6Ly9pZWVleHBsb3JlLmllZWUub3JnL2Fic3RyYWN0L2RvY3VtZW50LzgwMTE0ODk=> DOI: 10.1109/TMC.2017.2739742

## Description

This application claims priority to Chinese Patent Application No. 202010407526.7, filed with the China National Intellectual Property Administration on May 14, 2020 and entitled "BLUETOOTH PAIRING INFORMATION FAST SHARING METHOD AND ELECTRONIC DEVICE", and Chinese Patent Application No. 202011080169.4, filed with the China National Intellectual Property Administration on October 10, 2020 and entitled "INFORMATION SHARING METHOD, ELECTRONIC DEVICE, AND SYSTEM".

### TECHNICAL FIELD

This application relates to the field of electronic devices, and more specifically, to an information sharing method, an electronic device, and a system.

### BACKGROUND

Currently, a user may have a plurality of mobile phones that need to be paired with a same Bluetooth accessory (for example, a Bluetooth headset), or different members of a family want to pair their mobile phones with a same Bluetooth accessory (for example, a Bluetooth headset). A Bluetooth pairing mode is still difficult for some people to use.

For example, when a user lends a Bluetooth headset to another user, the another user needs to turn on Bluetooth on a mobile phone, search for a surrounding Bluetooth accessory, and pair the mobile phone with the Bluetooth headset after the nearby Bluetooth headset is found. This results in a complex pairing process between the mobile phone and the Bluetooth headset.

US 2016/360341 A1 discloses a first wireless communication device (UE device) associated with a certain user (or included in a specified set/group of UE devices) that establishes a first communication link with an accessory device according to a short-range radio access technology, and transmits link (pairing) information associated with the first communication link to a server, such as a cloud-based server. The server shares this (first) link information with other UE devices associated with the same user (or belonging to the same specified group of UE devices as the first UE device). Link information associated with the other UE devices (i.e. second link information) may equally be shared with the accessory device, and the other UE devices and accessory device may use the first link information and second link information in establishing respective communication links between any of the other UE devices and the accessory device without having to undergo a pairing procedure.

US 2019/191304 A1 discloses systems and methods for establishing a communication link between devices. A first device receives an identifier for an accessory device, and receives a security key from a second device. The security key is associated with the accessory device and/or the identifier. The first device sends a communication request to the accessory device using the identifier and the security key.

### SUMMARY

This application provides an information sharing method, an electronic device, and a system, to help share pairing information between a plurality of devices, and simplify a process of pairing between the devices.

According to a first aspect, a system according to claim 1 is provided.

In this embodiment of this application, the user can share the accessory device in the paired list of the first electronic device with the second electronic device, and the second electronic device can obtain the pairing information of the accessory device, so that the accessory device is displayed in the paired list of the second electronic device. This is convenient for the user to pair the second electronic device with the accessory device, simplifies a process of performing Bluetooth pairing between the second electronic device and the accessory device, and improves user experience.

In some possible implementations, the first electronic device may send the pairing information of the accessory device to the second electronic device by using a short-range wireless communication technology.

In some possible implementations, the first electronic device may send the pairing information of the accessory device to the second electronic device through an application (app).

With reference to the first aspect, in some implementations of the first aspect, the second electronic device is further configured to: before performing Bluetooth pairing with the accessory device, display prompt information on the second interface, where the prompt information is used to prompt that the second electronic device does not perform Bluetooth pairing with the accessory device; and hide the prompt information when completing Bluetooth pairing with the accessory device.

In this embodiment of this application, the second electronic device can add the accessory device that has not paired before to the second device list, and prompt, based on the prompt information, that the accessory device does not perform Bluetooth pairing with the second electronic device. In this way, the user can know that although the accessory device is in the paired device list of the second electronic device, the accessory device does not perform Bluetooth pairing with the second electronic device.

In some possible implementations, the second electronic device is further configured to display the prompt information when detecting an operation that the user selects the accessory device from the second device list, where the prompt information is used to prompt that the accessory device is shared and obtained by the first electronic device. The second electronic device is further configured to perform Bluetooth pairing with the accessory device when detecting an operation that the user determines to pair the second electronic device with the accessory device.

With reference to the first aspect, in some implementations of the first aspect, the second electronic device is further configured to: before performing Bluetooth pairing with the accessory device, send indication information to the accessory device, where the indication information is used to indicate the accessory device to enter a pairing available mode. The accessory device is further configured to enter the pairing available mode based on the indication information.

In this embodiment of this application, before performing Bluetooth pairing with the accessory device, the second electronic device can indicate the accessory device to enter the pairing available mode. This helps avoid a process in which the user initializes the accessory device (for example, the user places a Bluetooth headset in a headset box and presses and holds a function button on the headset box), avoid user intervention in a process in which the second electronic device performs pairing with the accessory device, and helps improve user experience.

With reference to the first aspect, in some implementations of the first aspect, the first electronic device is further configured to send validity period information of the pairing information to the second electronic device in response to the first operation, where the validity period information is used to indicate a validity period of the pairing information. The second electronic device is further configured to: before performing Bluetooth pairing with the accessory device, determine that the pairing information is within the validity period.

In this embodiment of this application, the first electronic device can send the validity period information to the second electronic device while sending the pairing information, and the second electronic device performs Bluetooth pairing with the accessory device when determining, based on the validity period information, that the pairing information is valid. This helps improve security of Bluetooth pairing between the second electronic device and the accessory device.

In some possible implementations, the second electronic device may send the validity period information to a cloud server, and the cloud server determines whether the pairing information is within the validity period. After determining that the pairing information is within the validity period, the cloud server may indicate, to the second electronic device, that the pairing information is valid.

The first electronic device is configured to: in response to the first operation, send a serial number corresponding to the pairing information to the second electronic device. The second electronic device is configured to: before performing Bluetooth pairing with the accessory device, determine that the serial number is not used.

In this embodiment of this application, the first electronic device can send the serial number to the second electronic device while sending the pairing information, and the second electronic device performs Bluetooth pairing with the accessory device when determining that the serial number is not used. This helps improve security of Bluetooth pairing between the second electronic device and the accessory device.

In some possible implementations, the second electronic device may send the serial number to the cloud server, and the cloud server determines whether the serial number is used. After determining that the serial number is not used, the cloud server may indicate, to the second electronic device, that the serial number is not used.

With reference to the first aspect, in some implementations of the first aspect, the first electronic device is further configured to send authentication information to the second electronic device in response to the first operation, where the authentication information is information obtained by the first electronic device from the accessory device. The second electronic device is further configured to: before performing Bluetooth pairing with the accessory device, perform interactive authentication with the accessory device based on the authentication information; and after the interactive authentication with the accessory device succeeds, perform Bluetooth pairing with the accessory device.

In this embodiment of this application, when the accessory device is connected to the first electronic device last time and needs to be connected to the second electronic device, the pairing information and the authentication information of the accessory device can be shared with the second electronic device by using the first electronic device. The second electronic device may first use the authentication information sent by the first electronic device to perform authentication with the accessory device. Bluetooth pairing is performed after the authentication succeeds. This helps improve security of pairing the second electronic device with the accessory device.

In addition, if the accessory device is the Bluetooth headset, a process in which the user needs to press the function button on the headset box, so that the Bluetooth headset can be paired with the second electronic device only after entering a pairing available state is avoided. This avoids an operation performed by the user when a new device is used to connect to the Bluetooth headset, and improves user experience.

With reference to the first aspect, in some implementations of the first aspect, the first electronic device and the second electronic device are devices under a same account.

With reference to the first aspect, in some implementations of the first aspect, the pairing information includes one or more of the following information: a media access control MAC address of the accessory device, a device identifier of the accessory device, or authorization information.

In some possible implementations, the pairing information includes a unique identifier of the accessory device, and the second electronic device may request the pairing information of the accessory device from the cloud server based on the unique identifier.

According to a second aspect, an information sharing method as set out in appended claim 8 is provided.

In this embodiment of this application, the user can share the accessory device in the paired list of the another electronic device with the electronic device, and the electronic device can obtain the pairing information of the accessory device, so that the accessory device is displayed in the paired list of the electronic device. This is convenient for the user to pair the electronic device with the accessory device, simplifies a process of performing pairing between the electronic device and the accessory device by the user, and improves user experience.

With reference to the second aspect, in some implementations of the second aspect, the method further includes: before performing Bluetooth pairing with the accessory device, displaying prompt information on the first interface, where the prompt information is used to prompt that the electronic device does not perform Bluetooth pairing with the accessory device; and hiding the prompt information when completing Bluetooth pairing with the accessory device.

In this embodiment of this application, the electronic device can add the accessory device that has not paired before to the device list, and prompt, based on the prompt information, that the accessory device does not perform Bluetooth pairing with the electronic device. In this way, the user can know that although the accessory device is in the paired device list of the electronic device, the accessory device does not perform Bluetooth pairing with the electronic device.

With reference to the second aspect, in some implementations of the second aspect, before the electronic device performs Bluetooth pairing with the accessory device, the method further includes: sending indication information to the accessory device, where the indication information is used to indicate the accessory device to enter a pairing available mode.

In this embodiment of this application, before performing Bluetooth pairing with the accessory device, the electronic device can indicate the accessory device to enter the pairing available mode. This helps avoid a process in which the user initializes the accessory device (for example, the user places a Bluetooth headset in a headset box and presses and holds a function button on the headset box), avoid user intervention in a process in which the electronic device performs pairing with the accessory device, and helps improve user experience.

With reference to the second aspect, in some implementations of the second aspect, before the electronic device performs Bluetooth pairing with the accessory device, the method further includes: receiving validity period information of the pairing information sent by the another electronic device, where the validity period information is used to indicate a validity period of the pairing information; and determining, by the electronic device, that the pairing information is within the validity period.

In this embodiment of this application, the another electronic device can send the validity period information to the electronic device while sending the pairing information, and the electronic device performs Bluetooth pairing with the accessory device when determining, based on the validity period information, that the pairing information is valid. This helps improve security of Bluetooth pairing between the electronic device and the accessory device.

Before the electronic device performs Bluetooth pairing with the accessory device, the method includes: receiving a serial number corresponding to the pairing information sent by the another electronic device; and determining that the serial number is not used.

In this embodiment of this application, the another electronic device can send the serial number to the electronic device while sending the pairing information, and the electronic device performs Bluetooth pairing with the accessory device when determining that the serial number is not used. This helps improve security of Bluetooth pairing between the electronic device and the accessory device.

With reference to the second aspect, in some implementations of the second aspect, before the electronic device performs Bluetooth pairing with the accessory device, the method further includes: receiving authentication information sent by the another electronic device, where the authentication information is information obtained by the another electronic device from the accessory device; and performing interactive authentication with the accessory device based on the authentication information. That the electronic device performs Bluetooth pairing with the accessory device includes: After the interactive authentication between the electronic device and the accessory device succeeds, the electronic device performs Bluetooth pairing with the accessory device.

In this embodiment of this application, when the accessory device is connected to the another electronic device last time and needs to be connected to the electronic device, the pairing information and the authentication information of the accessory device can be shared with the electronic device by using the another electronic device. The electronic device may first use the authentication information sent by the another electronic device to perform authentication with the accessory device. Bluetooth pairing is performed after the authentication succeeds. This helps improve security of pairing the electronic device with the accessory device.

In addition, if the accessory device is the Bluetooth headset, a process in which the user needs to press the function button on the headset box, so that the Bluetooth headset can be paired with the second electronic device only after entering a pairing available state is avoided. This avoids an operation performed by the user when a new device is used to connect to the Bluetooth headset, and improves user experience.

With reference to the second aspect, in some implementations of the second aspect, the electronic device and the another electronic device are devices under a same account.

With reference to the second aspect, in some implementations of the second aspect, the pairing information includes one or more of the following information: a media access control MAC address of the accessory device, a device identifier of the accessory device, or authorization information.

### BRIEF DESCRIPTION OF DRAWINGS

FIG. 1 is a schematic diagram of a structure of an electronic device;
FIG. 2 is a Bluetooth protocol framework according to this application:
FIG. 3 is a schematic diagram of a structure of a Bluetooth device according to this application;
FIG. 4(a) to FIG. 4(j) show a group of graphical user interfaces according to this application;
FIG. 5(a) to FIG. 5(e) show another group of graphical user interfaces according to this application;
FIG. 6(a) to FIG. 6(d) show another group of graphical user interfaces according to this application;
FIG. 7 is a schematic flowchart of an information sharing method according to this application;
FIG. 8 is a schematic diagram of a process of establishing a connection between a mobile phone A and a Bluetooth device according to this application;
FIG. 9 is a schematic diagram of a process of sharing the Bluetooth device with a mobile phone B by using the mobile phone A according to this application; and
FIG. 10 is another schematic flowchart of an information sharing method according to an embodiment of this application.

### DESCRIPTION OF EMBODIMENTS

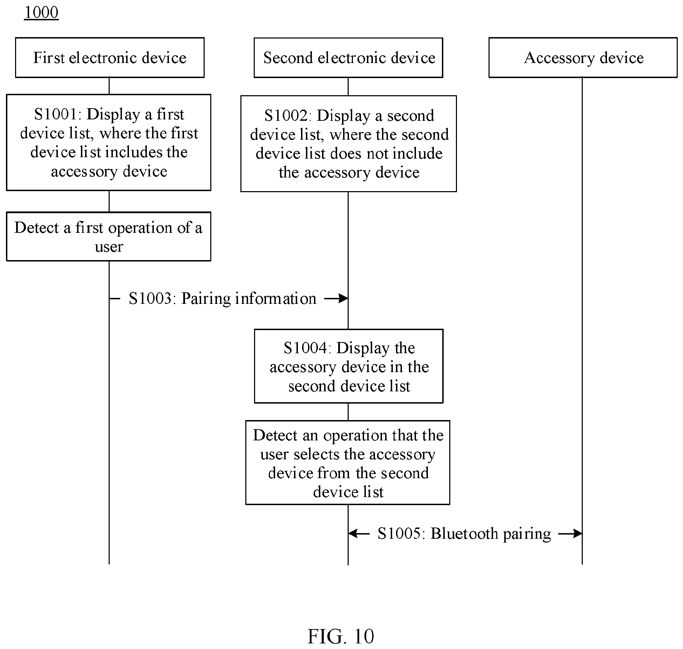

The invention is best understood in view of figure 10 and related description paragraphs. The other figures and related description paragraphs are provided for illustrative purposes only to enable a better understanding of the invention.

Terms used in the following embodiments are merely intended to describe specific embodiments, but are not intended to limit this application. The terms "one", "a", and "this" of singular forms used in this specification and the appended claims of this application are also intended to include expressions such as "one or more", unless otherwise specified in the context clearly. It should be further understood that in the following embodiments of this application, "at least one" and "one or more" mean one, two, or more. The term "and/or" is used to describe an association relationship between associated objects and represents that three relationships may exist. For example, A and/or B may represent the following cases: Only A exists, both A and B exist, and only B exists, where A and B each may be singular or plural. The character "/" generally indicates an "or" relationship between the associated objects.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

The following describes an electronic device, a user interface used for the electronic device, and embodiments used for using the electronic device. In some embodiments, the electronic device may be a portable electronic device that further includes other functions such as a personal digital assistant function and/or a music player function, for example, a mobile phone, a tablet computer, or a wearable electronic device having a wireless communication function (for example, a smartwatch). An example embodiment of the portable electronic device includes but is not limited to a portable electronic device using iOS^{®}, Android^{®}, Microsoft^{®}, or another operating system. The portable electronic device may alternatively be another portable electronic device, such as a laptop (Laptop) computer. It should be further understood that, in some other embodiments, the electronic device may not be the portable electronic device but a desktop computer.

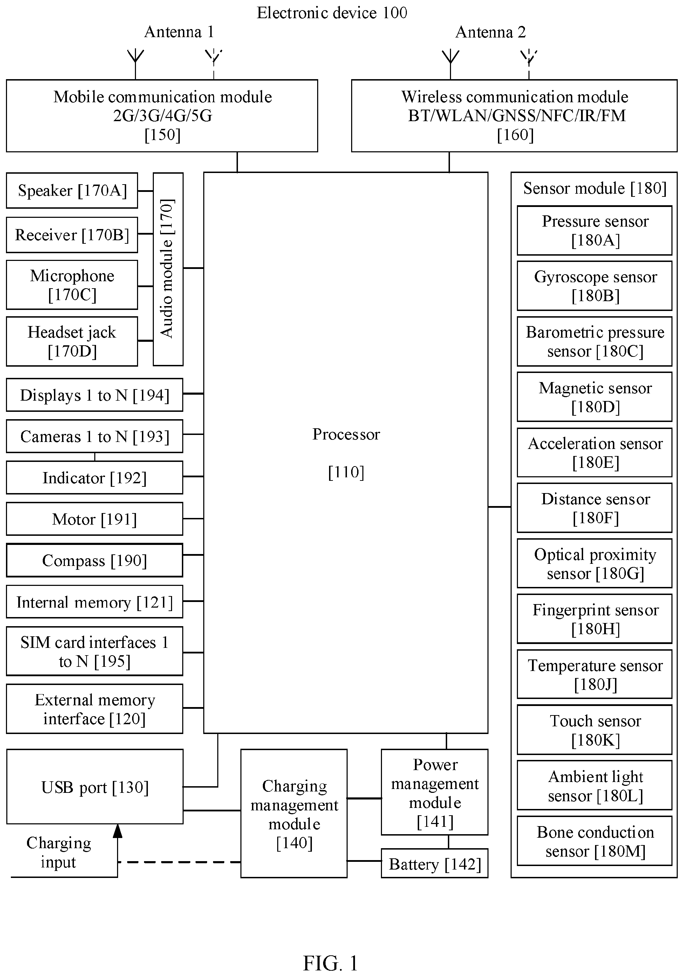

For example, FIG. 1 is a schematic diagram of a structure of an electronic device 100. The electronic device 100 may include a processor 110, an external memory interface 120, an internal memory 121, a universal serial bus (universal serial bus, USB) port 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a compass 190, a motor 191, an indicator 192, a camera 193, a display 194, a subscriber identification module (subscriber identification module, SIM) card interface 195, and the like.

It may be understood that the structure shown does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors. In some embodiments, the electronic device 101 may alternatively include one or more processors 110. The controller may generate an operation control signal based on instruction operation code and a time sequence signal, to complete control of instruction fetching and instruction execution. In some other embodiments, a memory may be disposed in the processor 110, to store instructions and data. For example, the memory in the processor 110 may be a cache. The memory may store an instruction or data that is just used or cyclically used by the processor 110. If the processor 110 needs to use the instruction or the data again, the processor 110 may directly invoke the instruction or the data from the memory. In this way, repeated access is avoided, waiting time of the processor 110 is reduced, and efficiency of processing data or executing instructions by the electronic device 101 is improved.

In some embodiments, the processor 110 may include one or more interfaces. The interface may include an inter-integrated circuit (inter-integrated circuit, 12C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a SIM card interface and/or a USB port. The USB port 130 is a port that conforms to a USB standard specification, and may be specifically a mini USB port, a micro USB port, a USB Type-C port, or the like. The USB port 130 may be used to connect to a charger to charge the electronic device 101, or may be used to transmit data between the electronic device 101 and a peripheral device. The USB port 130 may alternatively be used to connect to a headset, and play audio by using the headset.

It may be understood that an interface connection relationship between the modules illustrated in embodiments of this application is merely an example for description, and does not constitute a limitation on the structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from the charger. The charger may be a wireless charger or a wired charger. In the case of wired charging, the charging management module 140 may receive a charging input of a wired charger through the USB port 130. In the case of wireless charging, the charging management module 140 may receive a wireless charging input through a wireless charging coil of the electronic device 100. The charging management module 140 supplies power to the electronic device through the power management module 141 while charging the battery 142.

The power management module 141 is configured to connect the battery 142 and the charging management module 140 to the processor 110. The power management module 141 receives an input from the battery 142 and/or the charging management module 140, and supplies power to the processor 110, the internal memory 121, an external memory, the display 194, the camera 193, the wireless communication module 160, and the like. The power management module 141 may be configured to monitor parameters such as a battery capacity, a battery cycle count, and a battery state of health (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the electronic device 100 may be configured to cover one or more communication frequency bands. Different antennas may be multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that includes 2G/3G/4G/5G or the like and that is applied to the electronic device 100. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110.

The wireless communication module 160 may provide a wireless communication solution that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like and that is applied to the electronic device 100. The wireless communication module 160 may be one or more components integrating at least one communication processor module. The wireless communication module 160 receives an electromagnetic wave through the antenna 2, performs frequency modulation and filtering processing on the electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

The electronic device 100 may implement a display function through the GPU, the display 194, the application processor, and the like. The GPU is a microprocessor for image processing, and is connected to the display 194 and the application processor. The GPU is configured to perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini light-emitting diode (mini light-emitting diode, mini LED), a micro LED, a micro OLED, quantum dot light emitting diodes (quantum dot light emitting diodes, QLED), or the like. In some embodiments, the electronic device 100 may include one or more displays 194.

In some embodiments of this application, when the display panel is made of a material such as the OLED, the AMOLED, or the FLED, the display 194 in FIG. 1 may be folded. Herein, that the display 194 may be folded means that the display may be folded to any angle at any part and may be maintained at the angle. For example, the display 194 may be folded in half from left to right, or may be folded up and down in the middle.

The display 194 of the electronic device 100 may be a flexible display. Currently, the flexible display attracts much attention because of unique features and huge potential of the flexible display. Compared with a conventional display, the flexible display has features of strong flexibility and bendability, and can provide a user with a new bendability-based interaction mode, to satisfy more requirements of the user on the electronic device. For an electronic device configured with a foldable display, the foldable display of the electronic device may be switched between a small screen in a folded form and a large screen in an unfolded form at any time. Therefore, the user uses a split-screen function more frequently on the electronic device configured with the foldable display.

The electronic device 100 can implement a photographing function by using the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and a skin color of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV In some embodiments, the electronic device 100 may include one or more cameras 193.

The digital signal processor is configured to process a digital signal, and may process another digital signal in addition to the digital image signal. For example, when the electronic device 100 selects a frequency, the digital signal processor is configured to perform Fourier transformation on frequency energy.

The video codec is configured to compress or decompress a digital video. The electronic device 100 may support one or more video codecs. Therefore, the electronic device 100 may play or record videos in a plurality of coding formats, for example, moving picture experts group (moving picture experts group, MPEG)-1, MPEG-2, MPEG-3, MPEG-4, and the like.

The NPU is a neural-network (neural-network, NN) computing processor. The NPU quickly processes input information by referring to a structure of a biological neural network, for example, a transfer mode between human brain neurons, and may further continuously perform self-learning. Applications such as intelligent cognition of the electronic device 100, such as image recognition, facial recognition, speech recognition, and text understanding, can be implemented by using the NPU.

The external memory interface 120 may be used to connect to an external storage card, for example, a micro SD card, to extend a storage capability of the electronic device 100. The external storage card communicates with the processor 110 through the external memory interface 120, to implement a data storage function. For example, files such as music and videos are stored in the external storage card.

The internal memory 121 is configured to store one or more computer programs, and the one or more computer programs include instructions. The processor 110 runs the instructions stored in the internal memory 121, to enable the electronic device 101 to perform a Bluetooth pairing and connection method provided in the embodiments of this application, and optionally also various applications, data processing, and the like. The internal memory 121 may include a program storage area and a data storage area. The program storage area may store an operating system. The program storage area may further store one or more applications (for example, Gallery and Contacts), and the like. The data storage area may store data (for example, a photo and a contact) created during use of the electronic device 101, and the like. In addition, the internal memory 121 may include a high-speed random access memory, or may include a nonvolatile memory, for example, one or more magnetic disk storage devices, a flash memory device, or a universal flash storage (universal flash storage, UFS). In embodiments, the processor 110 runs the instructions stored in the internal memory 121 and/or the instructions stored in the memory disposed in the processor 110, to enable the electronic device 101 to perform the Bluetooth pairing and connection method provided in embodiments of this application, and optionally also another application and data processing. The electronic device 100 can implement an audio function such as music playing or recording through the audio module 170, the speaker 170A, the receiver 170B, the microphone 170C, the headset jack 170D, the application processor, and the like.

The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The pressure sensor 180A is configured to sense a pressure signal, and can convert the pressure signal into an electrical signal. In some embodiments, the pressure sensor 180A may be disposed in the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on a change in the capacitance. When a touch operation is performed on the display 194, the electronic device 100 detects intensity of the touch operation through the pressure sensor 180A. The electronic device 100 may also calculate a touch position based on a detection signal of the pressure sensor 180A. In some embodiments, touch operations that are performed in a same touch position but have different touch operation intensity may correspond to different operation instructions. For example, when a touch operation whose touch operation intensity is less than a first pressure threshold is performed on an SMS message application icon, an instruction for viewing an SMS message is performed. When a touch operation whose touch operation intensity is greater than or equal to the first pressure threshold is performed on the SMS message application icon, an instruction for creating an SMS message is performed.

The gyroscope sensor 180B may be configured to determine a moving posture of the electronic device 100. In some embodiments, an angular velocity of the electronic device 100 around three axes (that is, axes X, Y, and Z) may be determined by using the gyroscope sensor 180B. The gyroscope sensor 180B may be configured to implement image stabilization during photographing. For example, when the shutter is pressed, the gyroscope sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyroscope sensor 180B may also be used in a navigation scenario and a somatic game scenario.

The acceleration sensor 180E may detect accelerations in various directions (usually on three axes) of the electronic device 100, and may detect magnitude and a direction of gravity when the electronic device 100 is still. The acceleration sensor 180E may be configured to identify a posture of the electronic device, and is used in an application such as switching between a landscape mode and a portrait mode or a pedometer.

The ambient light sensor 180L is configured to sense ambient light brightness. The electronic device 100 may adaptively adjust brightness of the display 194 based on the sensed ambient light brightness. The ambient light sensor 180L may also be configured to automatically adjust white balance during photographing. The ambient light sensor 180L may also cooperate with the optical proximity sensor 180G to detect whether the electronic device 100 is in a pocket, to avoid an accidental touch.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device 100 executes a temperature processing policy through the temperature detected by the temperature sensor 180J. For example, when the temperature reported by the temperature sensor 180J exceeds a threshold, the electronic device 100 lowers performance of a processor nearby the temperature sensor 180J, to reduce power consumption for thermal protection. In some other embodiments, when the temperature is lower than another threshold, the electronic device 100 heats the battery 142 to prevent the electronic device 100 from being shut down abnormally due to a low temperature. In some other embodiments, when the temperature is lower than still another threshold, the electronic device 100 boosts an output voltage of the battery 142 to avoid abnormal shutdown caused by a low temperature.

The touch sensor 180K is also referred to as a "touch panel". The touch sensor 180K may be disposed in the display 194, and the touch sensor 180K and the display 194 constitute a touchscreen, which is also referred to as a "touch screen". The touch sensor 180K is configured to detect a touch operation performed on or near the touch sensor 180K. The touch sensor may transfer the detected touch operation to the application processor to determine a type of a touch event. A visual output related to the touch operation may be provided through the display 194. In some other embodiments, the touch sensor 180K may also be disposed on a surface of the electronic device 100 at a location different from that of the display 194.

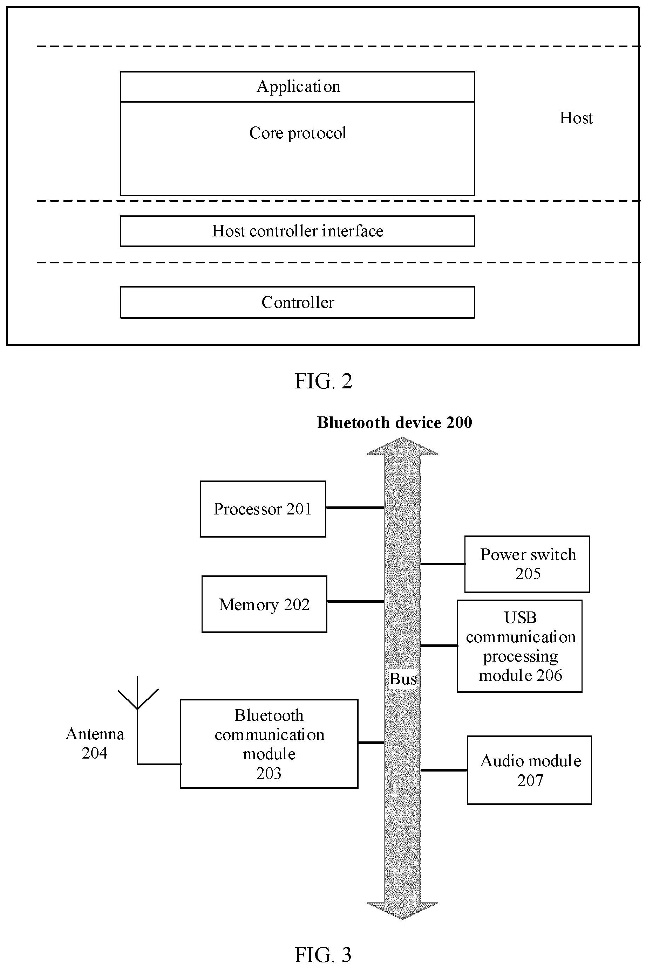

As shown in FIG. 2, an embodiment of this application provides a Bluetooth protocol framework, including but not limited to a host (host) protocol stack, a host controller interface (host controller interface, HCI), and a controller (controller).

The host protocol stack defines a plurality of profiles (profile) and a core protocol (protocol) in the Bluetooth framework. Each profile defines a corresponding message format and a corresponding application rule, and the profile is a Bluetooth application (application). To implement interconnection and interworking between different devices on different platforms, the Bluetooth protocol is a specification formulated for various possible and universal application scenarios, for example, an advanced audio distribution profile (advanced audio distribution profile, A2DP), a hands-free profile (hands-free profile, HFP), and the like. The core protocol includes but is not limited to a Bluetooth service discovery protocol (service discover protocol, SDP), a logical link control and adaptation protocol (logical link control and adaptation protocol, L2CAP), and the like. The core protocol is essential to the Bluetooth protocol stack.

The HCI provides, for upper-layer profiles, a unified interface for entering a link manager and a unified manner for entering a baseband. There are several transport layers between the host core protocol stack and the controller. These transport layers are transparent, and are used to complete data transmission. The Bluetooth special interest group (Bluetooth special interest group, SIG) specifies four physical bus modes, namely, four HCI transport layers: a USB, an RS232, a UART, and a PC card, used to connect to hardware.

The controller defines a bottom-layer hardware part, including a radio frequency (RF), a baseband (BB), and a link manager (LM). An RF layer filters and transmits data bit streams through microwaves on a 2.4 GHz unlicensed ISM band, and mainly defines conditions that a Bluetooth transceiver needs to meet to work normally on this frequency band. The baseband is responsible for frequency hopping and transmission of Bluetooth data and information frames. The link manager is responsible for connecting, establishing, and disconnecting links and performing security control. The link manager (link manager, LM) layer is a link management layer protocol of the Bluetooth protocol stack, and is responsible for translating an upper-layer HCI command into an operation that can be accepted by the baseband, establishing an asynchronous connection-oriented link (asynchronous connection-oriented link, ACL) and a synchronous connection-oriented/extended link (synchronous connection-oriented/extended link, SCO), and enabling a Bluetooth device to enter a working mode of an energy saving state, and the like. A link control (link control, LC) layer is responsible for making response to an upper-layer LM command (for example, executing an LM command for establishing a transmission link of a data packet, maintaining a link, or the like) during transmission of a group of data packets.

Some content of a method described in embodiments of this application is implemented by the wireless communication module 160 of the electronic device 100 shown in FIG. 1, and may be specifically performed by a Bluetooth module or a Bluetooth chip.

FIG. 3 is a schematic diagram of an example of a structure of a Bluetooth device 200 suitable for use with embodiments of this application.

The following description uses the Bluetooth device 200 as an example. It should be understood that, the Bluetooth device 200 shown in FIG. 3 is merely an example, and the Bluetooth device 200 may have more or fewer components than those shown in FIG. 3, may combine two or more components, or may have different component configurations. Various components shown in the figure may be implemented by using hardware including one or more signal processing and/or application-specific integrated circuits, software, or a combination of hardware and software.

As shown in FIG. 3, the Bluetooth device 200 may include a processor 201, a memory 202, a Bluetooth communication module 203, an antenna 204, a power switch 205, a USB communication processing module 206, and an audio module 207.

The processor 201 may be configured to read and execute computer-readable instructions. During specific implementation, the processor 201 may mainly include a controller, an arithmetic unit, and a register. The controller is mainly responsible for decoding instructions and sending a control signal for an operation corresponding to the instructions. The arithmetic unit is mainly responsible for storing a register operand, an intermediate operation result, and the like that are temporarily stored during instruction execution. During specific implementation, a hardware architecture of the processor 201 may be an application-specific integrated circuit (ASIC) architecture, an MIPS architecture, an ARM architecture, an NP architecture, or the like.

In some embodiments, the processor 201 may be configured to parse a signal, for example, a pairing mode modification request sent by the electronic device 100, received by the Bluetooth communication processing module 203. The processor 201 may be configured to perform a corresponding processing operation based on a parsing result, for example, generate a pairing mode modification response.

The memory 202 is coupled to the processor 201, and is configured to store various software programs and/or a plurality of groups of instructions. During specific implementation, the memory 202 may include a high-speed random access memory, and may also include a nonvolatile memory such as one or more disk storage devices, a flash device, or another nonvolatile solid-state storage device. The memory 202 may store an operating system, for example, an embedded operating system such as uCOS, VxWorks, or RTLinux. The memory 202 may further store a communication program. The communication program may be used to communicate with the electronic device 100, one or more servers, or another device.

The Bluetooth communication module 203 may include a classic Bluetooth (BT) module and a Bluetooth low energy (Bluetooth low energy, BLE) module.

In some embodiments, the Bluetooth communication module 203 may listen to a signal, such as a detection request or a scanning signal, transmitted by another device (for example, the electronic device 100), and may send a response signal, a scanning response, or the like, to enable the another device (for example, the electronic device 100) to discover the Bluetooth device 200; establish a wireless communication connection to the another device (for example, the electronic device 100); and communicate with the another device (for example, the electronic device 100) through Bluetooth.

In some other embodiments, the Bluetooth communication module 203 may also transmit a signal, for example, broadcast a BLE signal, to enable another device (for example, the electronic device 100) to discover the Bluetooth device 200; establish a wireless communication connection to the another device (for example, the electronic device 100); and communicate with the another device (for example, the electronic device 100) through Bluetooth.

A wireless communication function of the Bluetooth device 200 may be implemented by using the antenna 204, the Bluetooth communication module 203, a modem processor, or the like.

The antenna 204 may be configured to transmit and receive electromagnetic wave signals. Each antenna in the Bluetooth device 200 may be configured to cover one or more communication frequency bands.

In some embodiments, the Bluetooth communication module 203 may have one or more antennas.

The power switch 205 may be configured to control a power supply to supply power to the Bluetooth device 200.

The USB communication processing module 206 may be configured to communicate with another device through a USB port (not shown).

The audio module 26 may be configured to output an audio signal through an audio output interface, so that the Bluetooth device 200 can support audio playing. The audio module may be configured to receive audio data through an audio input interface. The Bluetooth device 200 may be a media playback device, for example, a Bluetooth headset.

In some embodiments, the Bluetooth device 200 may further include a display (not shown), and the display may be configured to display an image, prompt information, or the like. The display may be an LCD display, an OLED display, an AMOLED display, an FLED display, a QLED display, or the like.

In some embodiments, the Bluetooth device 200 may further include a serial interface, for example, an RS-232 interface. The serial interface may be connected to another device, for example, an audio speaker device such as a speaker, so that the Bluetooth device 200 and the audio speaker device cooperate in playing of audio and a video.

It can be understood that the structure shown in FIG. 3 does not constitute a specific limitation on the Bluetooth device 200. In some other embodiments of this application, the Bluetooth device 200 may include more or fewer components than those shown in the figure, or combine some components, or split some components, or have different component arrangements. The components shown in the figure may be implemented by hardware, software, or a combination of software and hardware.

In the method in embodiments of this application, for the Bluetooth protocol framework used by the Bluetooth device, refer to FIG. 2. Details are not described herein again.

Before embodiments of this application are described, several technical terms in embodiments of this application are first described.

Virtual pairing: Virtual pairing indicates that a device is displayed as "paired" to a user, but the device is actually unpaired from the perspective of a Bluetooth protocol. The device in a virtual pairing state may trigger pairing protocol interaction when being used for the first time, to complete physical pairing.

Physical pairing: Physical pairing is a conventional pairing state, and also includes a Bluetooth protocol interaction process in which a physical pairing action is completed.

Silent pairing: A conventional pairing process usually requires a user operation and manual confirmation, and silent pairing means that in an entire pairing process, no user operation is required, and the user is totally unaware except adding time corresponding to pairing protocol interaction.

For ease of understanding, in the following embodiments of this application, a mobile phone having the structures shown in FIG. 1 and FIG. 2, and a Bluetooth headset shown in FIG. 3 are used as examples to describe in detail the Bluetooth pairing information sharing method provided in embodiments of this application with reference to the accompanying drawings.

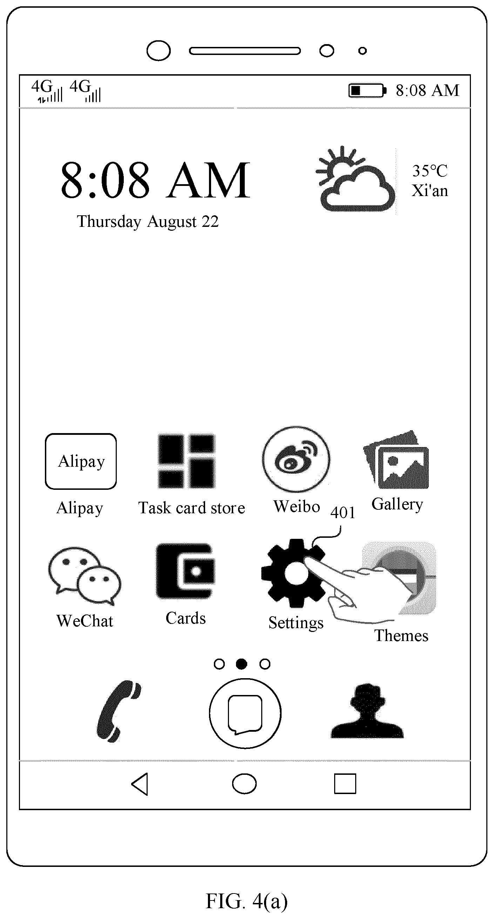

FIG. 4(a) to FIG. 4(j) show a group of graphical user interfaces (graphical user interfaces, GUIs) suitable for use with embodiments of this application.

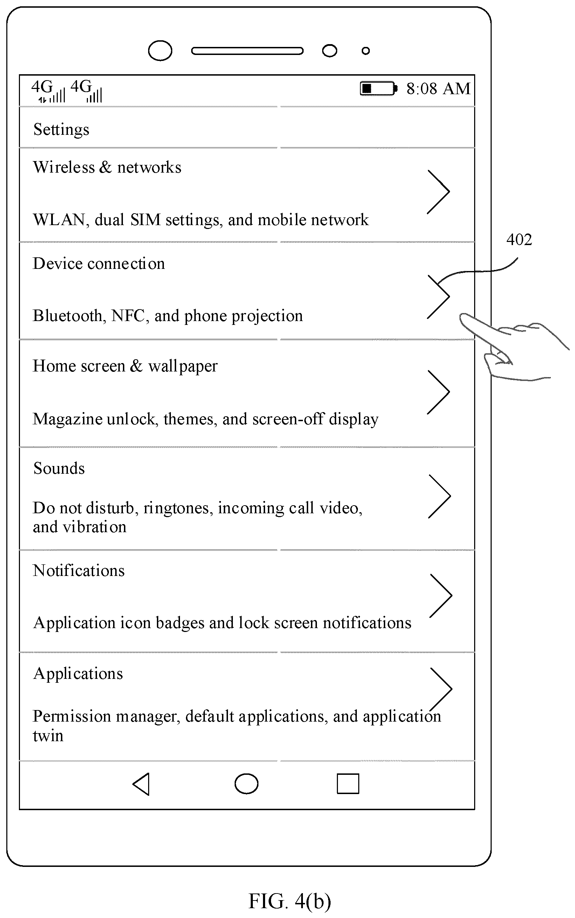

Refer to FIG. 4(a). A GUI is a home screen of a mobile phone. The home screen of the mobile phone includes icons of a plurality of applications, and the icons of the plurality of applications include a Settings icon 401. After detecting an operation that a user taps the icon 401 on the home screen, the mobile phone may start to set a related function of the mobile phone, and display a GUI shown in FIG. 4(b).

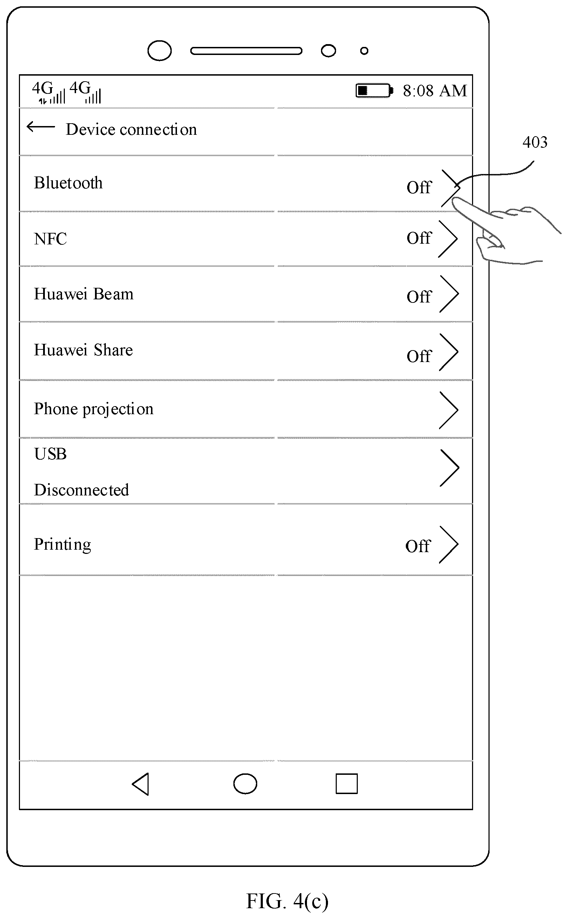

Refer to the GUI shown in FIG. 4(b). The GUI is a Settings interface of the mobile phone. The GUI includes a plurality of function options. The plurality of function options include Wireless & networks, Device connection, Home screen & wallpaper, Sound, and the like. The user may set functions such as Bluetooth, NFC, and Phone projection by using a device connection function. After detecting an operation that the user taps a device connection function 402, the mobile phone displays a GUI shown in FIG. 4(c).

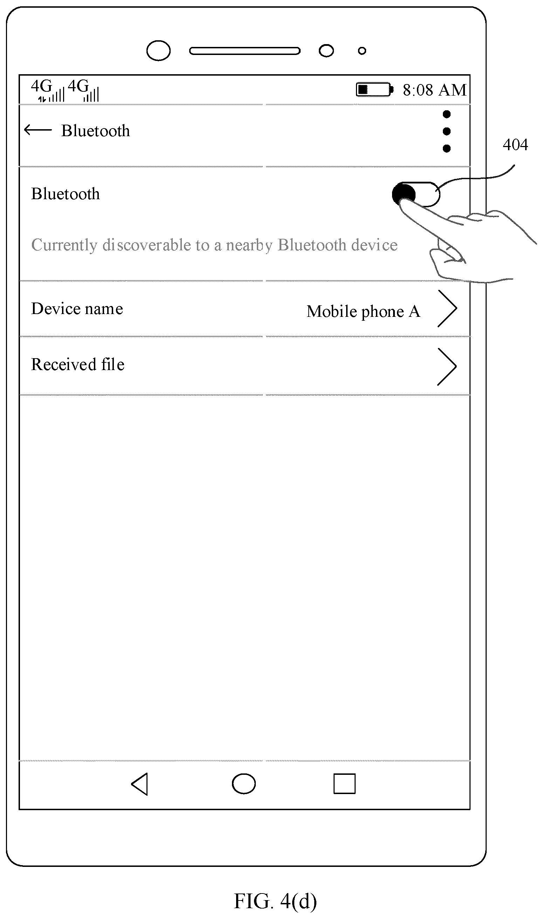

Refer to the GUI shown in FIG. 4(c). The GUI is a device connection setting interface of the mobile phone. The GUI includes a plurality of function options in Device connection, and the plurality of function options include device connection options such as Bluetooth, NFC, Huawei Beam, Huawei Share, and Phone projection. After detecting an operation that the user taps a Bluetooth function 403, the mobile phone displays a GUI shown in FIG. 4(d).

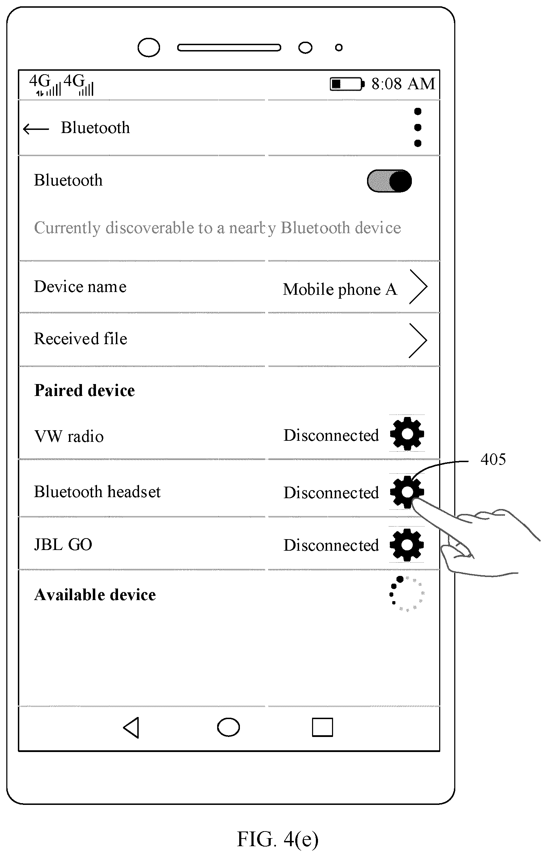

Refer to the GUI shown in FIG. 4(d). The GUI is a Bluetooth setting interface. The Bluetooth settings interface includes functions such as a Bluetooth enabling control 404 and a device name "Mobile phone A". After detecting an operation that the user taps the control 404, the mobile phone may enable a Bluetooth function, and may display a GUI shown in FIG. 4(e).

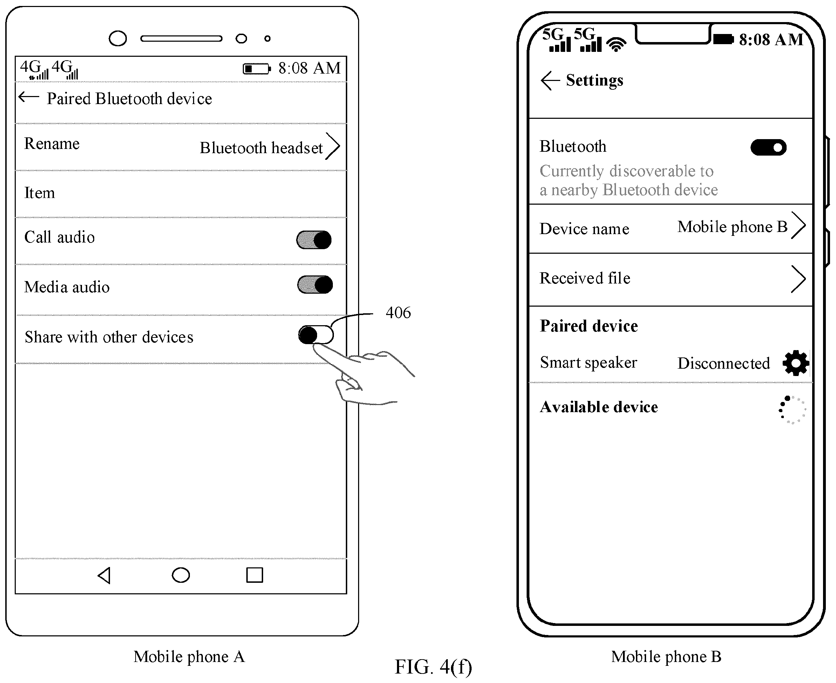

Refer to the GUI shown in FIG. 4(e). The GUI is another Bluetooth setting interface. The interface may display a paired device and an available device. The paired device may be a Bluetooth device previously connected to the mobile phone, and the available device may be a Bluetooth device found by the mobile phone. The paired device includes Bluetooth devices whose device names are "VW radio", "Bluetooth headset", and "JBL GO". After detecting an operation that the user taps a control 405, the mobile phone displays a GUI shown in FIG. 4(f).

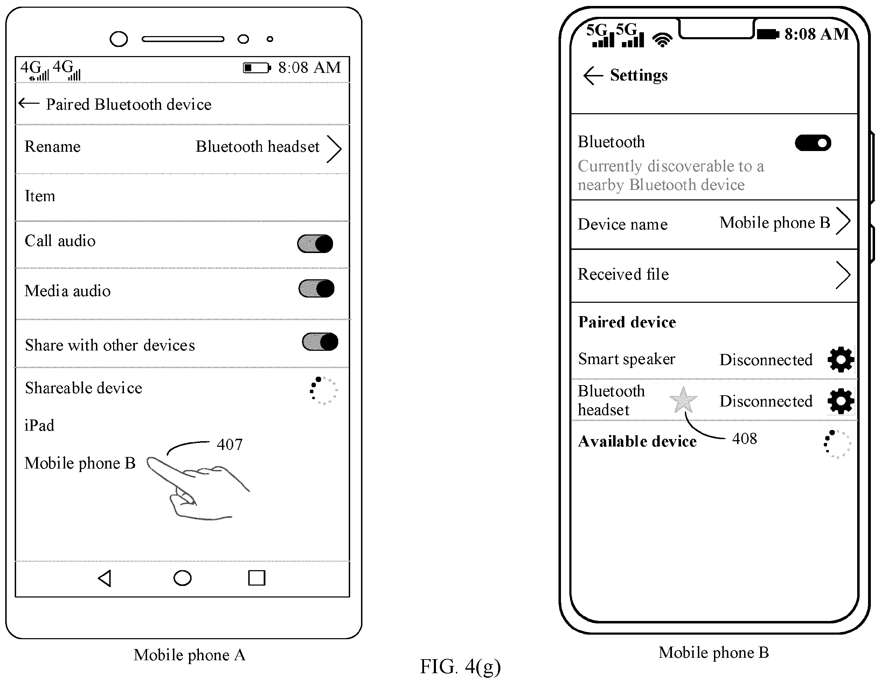

Refer to the GUI shown in FIG. 4(f). The GUI is a setting interface of a Bluetooth device whose device name is "Bluetooth headset". The setting interface includes a function setting for the Bluetooth device whose device name is "Bluetooth headset", including function options such as call audio, media audio, and sharing to another device. In this case, after detecting an operation that the user enables a Bluetooth function, a mobile phone B may display "Paired device" and "Available device". In the "Paired device", a Bluetooth device that has been connected to the mobile phone B may be displayed, and in the "Available device", a Bluetooth device that is currently found but has not been connected to the mobile phone B may be displayed. The "Paired device" include a smart speaker (the mobile phone B performed Bluetooth pairing previously with the smart speaker). After detecting an operation that the user taps a control 406, a mobile phone A may display a GUI shown in FIG. 4(g).

Refer to the GUI shown in FIG. 4(g). The GUI is another setting interface of a Bluetooth device whose device name is "Bluetooth headset". A device that can be shared by the mobile phone A is displayed on the setting interface. The shareable device includes devices whose device names are "iPad" and "mobile phone B". After the mobile phone A detects an operation that the user taps a device 407 whose device name is "Mobile phone B", the mobile phone A may send pairing information about the "Bluetooth headset" (for example, information such as a media access control (media access control, MAC) address, a device name, and a device type of the "Bluetooth headset") to the mobile phone B. When the mobile phone B receives the pairing information about the "Bluetooth headset" sent by the mobile phone A, the Bluetooth device whose device name is "Bluetooth headset" may be displayed in the "Paired device" on the Bluetooth setting interface. An icon 408 is included near the device name "Bluetooth headset". The icon 408 may be used to prompt that the mobile phone B only performs virtual pairing with the Bluetooth headset, and does not implement physical pairing with the Bluetooth headset.

It should be further understood that, if the pairing information includes the device name "Bluetooth headset", the mobile phone B may display the device name of the device in the "Paired device". If the pairing information includes a device type "headset", the mobile phone B may further display an icon of the headset near the device name.

In an embodiment, another device other than the mobile phone A under a first account is displayed in a shareable device list on the mobile phone A, where a logged-in account on the mobile phone A is the first account. For example, the logged-in account on the mobile phone A is a Huawei account 1, and devices under the Huawei account 1 include the mobile phone A and the mobile phone B. In this case, when the mobile phone A detects an operation that the user taps the control 406, the mobile phone A may display information about the mobile phone B in the shareable device list.

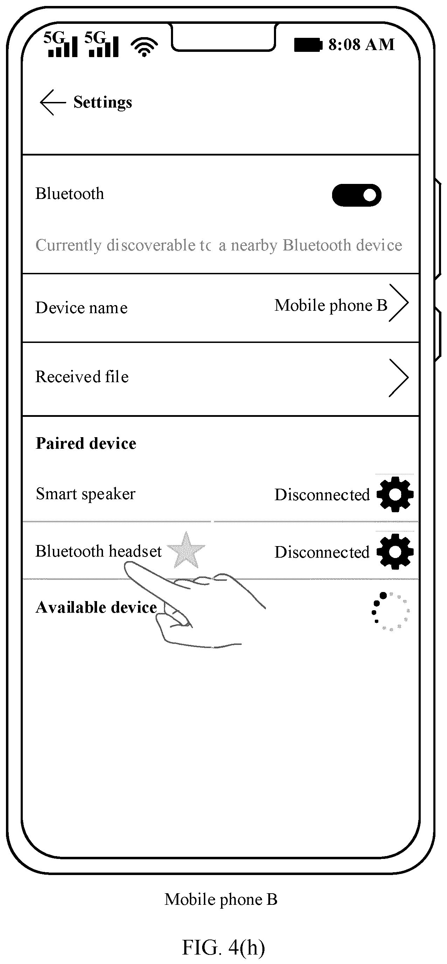

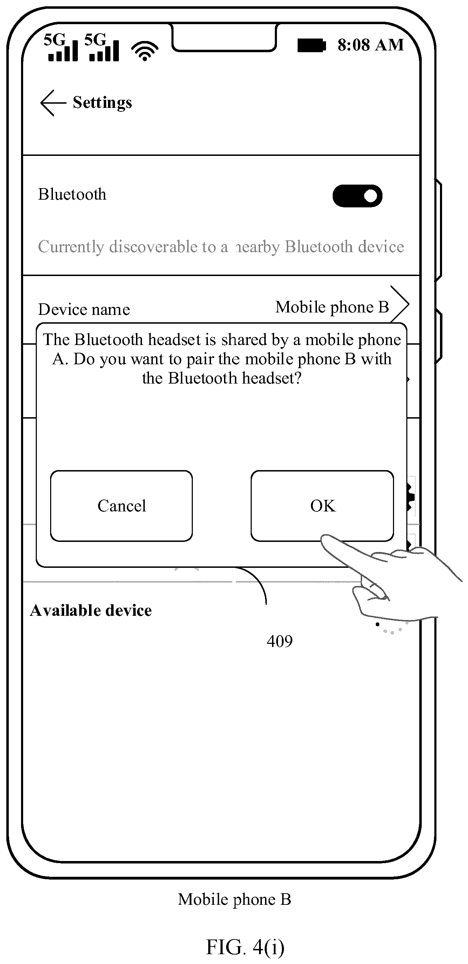

Refer to FIG. 4(h). The GUI is another Bluetooth setting interface of the mobile phone B. After the mobile phone B detects that the user taps the Bluetooth device whose device name is "Bluetooth headset", the mobile phone may display a GUI shown in FIG. 4(i).

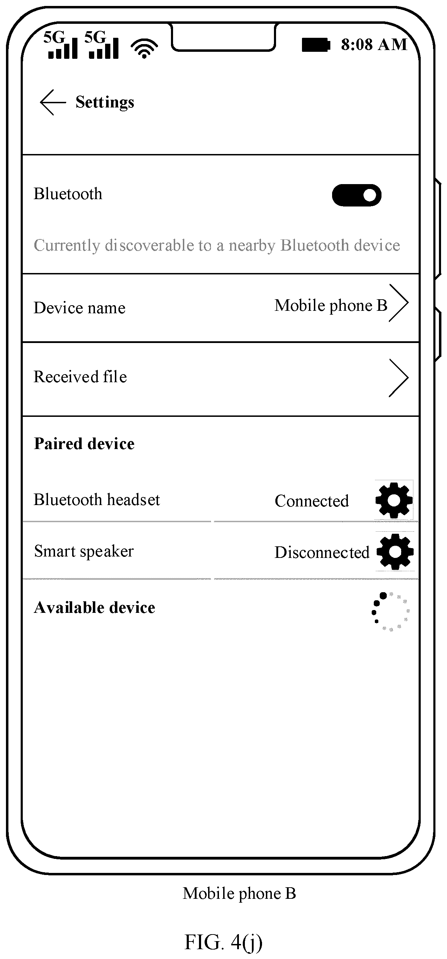

Refer to FIG. 4(i). The GUI is another Bluetooth setting interface of the mobile phone B. After the mobile phone B detects that the user taps the Bluetooth device whose device name is "Bluetooth headset", the mobile phone may display a reminder box 409, where the reminder box 409 includes prompt information "The Bluetooth headset is obtained through sharing by the mobile phone A, and whether the mobile phone B needs to be paired with the Bluetooth headset". When the mobile phone B detects that the user taps an "OK" control, the mobile phone may display a GUI shown in FIG. 4(j).

Refer to FIG. 4(j). The GUI is another Bluetooth setting interface of the mobile phone B. When the mobile phone B detects that the user taps the "OK" control, the mobile phone B may perform silent pairing with the Bluetooth device whose device name is "Bluetooth headset". Then, the user may use the Bluetooth headset to answer an incoming call from the mobile phone B, or use the Bluetooth headset to play audio on the mobile phone B, or the like.

It should be understood that, after the mobile phone B completes silent pairing with the Bluetooth device whose device name is "Bluetooth headset", the mobile phone B completes physical pairing with the "Bluetooth headset".

In this embodiment of this application, the mobile phone A may discover the mobile phone B by scanning a surrounding device, and send pairing information of a paired device on the mobile phone A to the mobile phone B through near field communication. This avoids a case in which the user needs to perform a corresponding operation on a Bluetooth device, and then, the Bluetooth device can perform Bluetooth connection to the mobile phone A only after the Bluetooth device enters a pairing available state, avoids an operation performed by the user when a new device is used to connect to the Bluetooth device, and improves user experience.

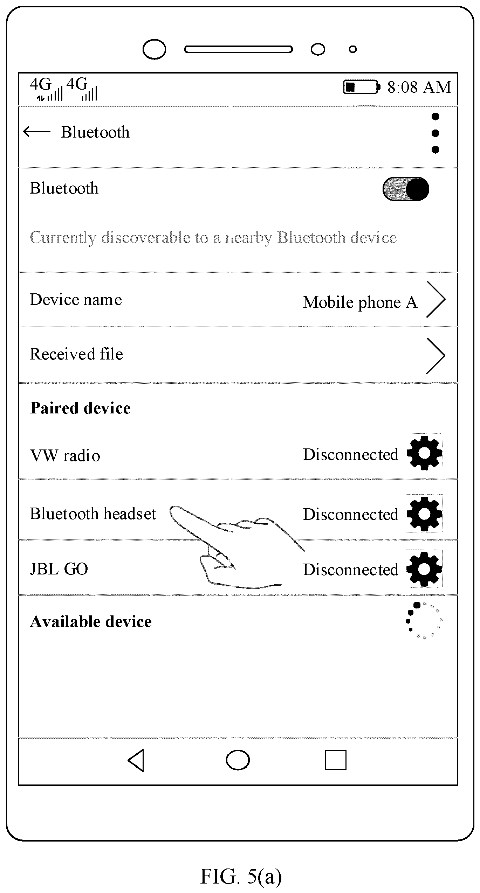

FIG. 5(a) to FIG. 5(e) show another group of GUIs suitable for use with embodiments of this application.

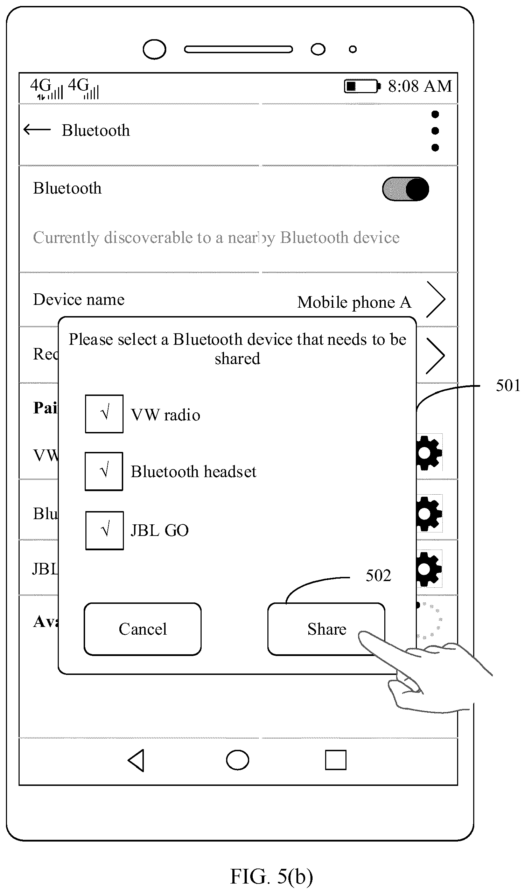

Refer to a GUI shown in FIG. 5(a). The GUI is another display interface of Bluetooth setting. The display interface may display a paired device and an available device. The paired device may be a Bluetooth device previously connected to a mobile phone, and the available device may be a Bluetooth device found by the mobile phone. The paired device includes Bluetooth devices whose device names are "VW radio", "Bluetooth headset", and "JBL GO". When detecting a press and hold operation of a user on the display interface, the mobile phone A may display a GUI shown in FIG. 5(b).

In an embodiment, when detecting a press and hold operation performed by the user on the paired device, the mobile phone A may also display the GUI shown in FIG. 5(b).

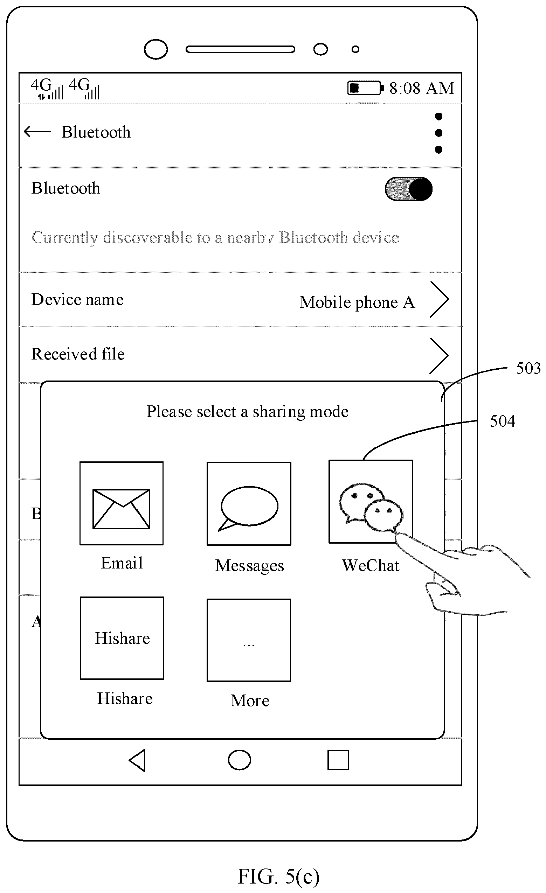

Refer to the GUI shown in FIG. 5(b). The GUI is another display interface of Bluetooth setting. The display interface includes a reminder box 501, where the reminder box 501 includes prompt information, and the prompt information is used to prompt the user "Please select a Bluetooth device that needs to be shared". The user may select the Bluetooth device that needs to be shared. After detecting an operation that the user selects the Bluetooth devices whose device names are "VW radio", "Bluetooth headset", and "JBL GO" and taps a control 502, the mobile phone A may display a GUI shown in FIG. 5(c).

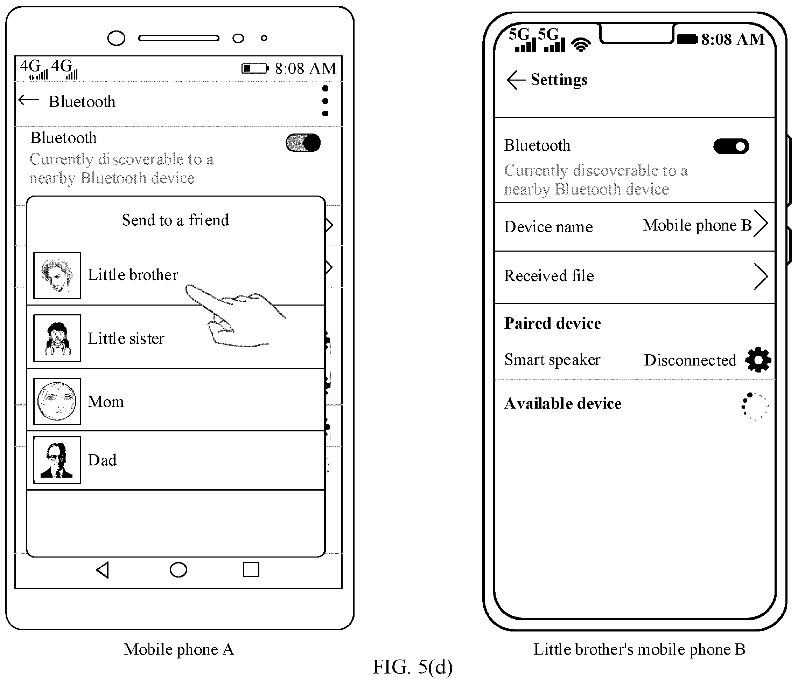

Refer to the GUI shown in FIG. 5(c). The GUI is another display interface of Bluetooth setting. The display interface includes a reminder box 503, where the reminder box 503 includes prompt information, and the prompt information is used to prompt the user "Please select a sharing mode". The sharing mode includes email sharing, information sharing, WeChat sharing, and Hishare sharing. After detecting an operation that the user taps a WeChat sharing control 504, the mobile phone A may display a GUI shown in FIG. 5(d).

Refer to the GUI shown in FIG. 5(d). The GUI is another display interface of Bluetooth setting. The display interface includes a selection list of sending objects. The selection list includes a brother, a sister, a mother, and a father. Before the user chooses to share pairing information of "VW radio", "Bluetooth headset", and "JBL GO" with the contact brother, "Paired device" and "Available device" are displayed on a Bluetooth display interface of a mobile phone B. In the "Paired device", a Bluetooth device that has been connected to the mobile phone B may be displayed, and in the "Available device", a Bluetooth device that is currently found but has not been connected to the mobile phone B may be displayed. The "Paired device" include a smart speaker (the mobile phone B performed Bluetooth pairing previously with the smart speaker).

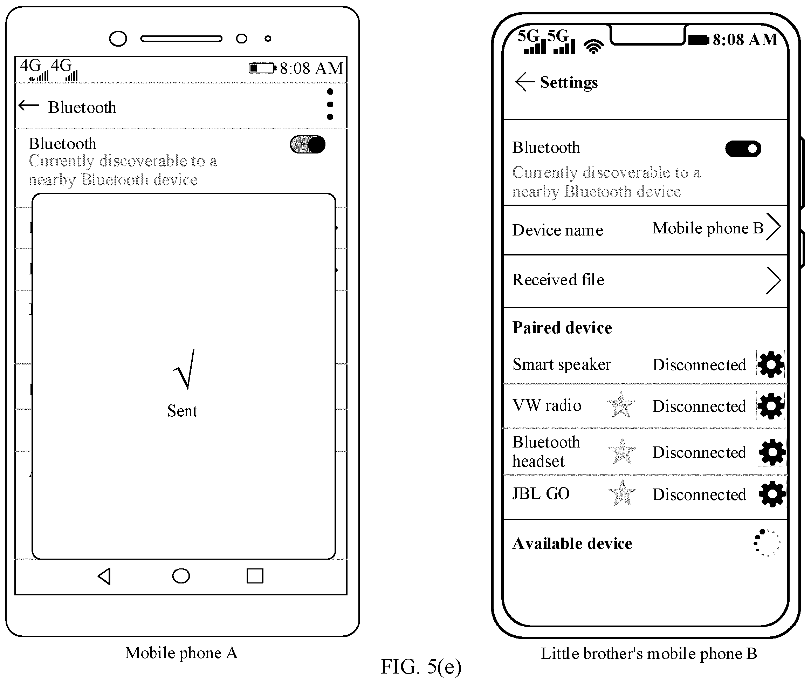

Refer to a GUI shown in FIG. 5(e). The GUI is another display interface of Bluetooth setting. After the user selects the brother as a sending object of the pairing information of "VW radio", "Bluetooth headset", and "JBL GO", the mobile phone A may prompt the user that corresponding pairing information has been sent. In addition, after receiving the corresponding pairing information, the mobile phone B may display, in the "Paired device", devices whose device names are "Smart speaker", "VW radio", "Bluetooth headset", and "JBL GO". The icon 408 may be displayed near the devices whose device names are "VW radio", "Bluetooth headset", and "JBL GO". The icon 408 may be used to prompt that the mobile phone B only performs virtual pairing with the devices whose device names are "VW radio", "Bluetooth headset", and "JBL GO", and does not implement physical pairing with the devices.

It should be understood that after receiving the pairing information sent by the mobile phone A, the mobile phone B may obtain, through parsing, the pairing information. For example, the mobile phone B obtains, through parsing, that the pairing information includes MAC addresses and device names (for example, "VW radio", "Bluetooth headset", and "JBL GO"), and adds the device names of the three devices to the "Paired device". Alternatively, after the mobile phone B detects that the user taps the received pairing information in a WeChat application of the mobile phone B, the mobile phone B may display corresponding device names in the "Paired device".

It should be further understood that although the mobile phone B displays Bluetooth devices whose device names are "VW radio", "Bluetooth headset", and "JBL GO" in the "Paired device" on the Bluetooth setting interface, the mobile phone B only performs virtual pairing with "VW radio", "Bluetooth headset", and "JBL GO", and does not implement physical pairing with "VW radio", "Bluetooth headset", and "JBL GO" in this case. After the mobile phone B detects that the user taps a Bluetooth device and establishes a Bluetooth connection to the Bluetooth device, the mobile phone B completes physical pairing with the device.

In this embodiment of this application, the mobile phone A may send the pairing information of the paired device on the mobile phone A to the mobile phone B through an email, a social application, an SMS message, or the like. This avoids a case in which the user needs to perform a corresponding operation on a Bluetooth device, and then, the Bluetooth device can perform Bluetooth connection to the mobile phone A only after the Bluetooth device enters a pairing available state, avoids an operation performed by the user when a new device is used to connect to the Bluetooth device, and improves user experience.

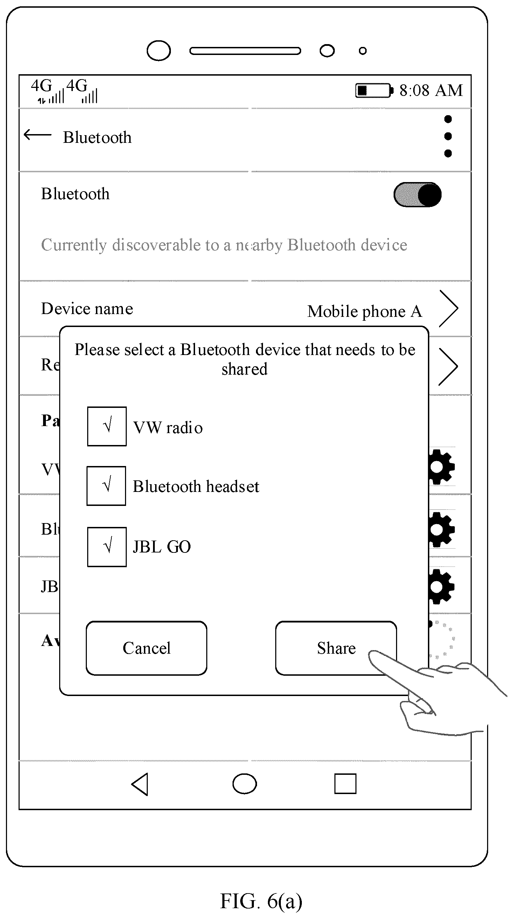

FIG. 6(a) to FIG. 6(d) show another group of GUIs suitable for use with embodiments of this application.

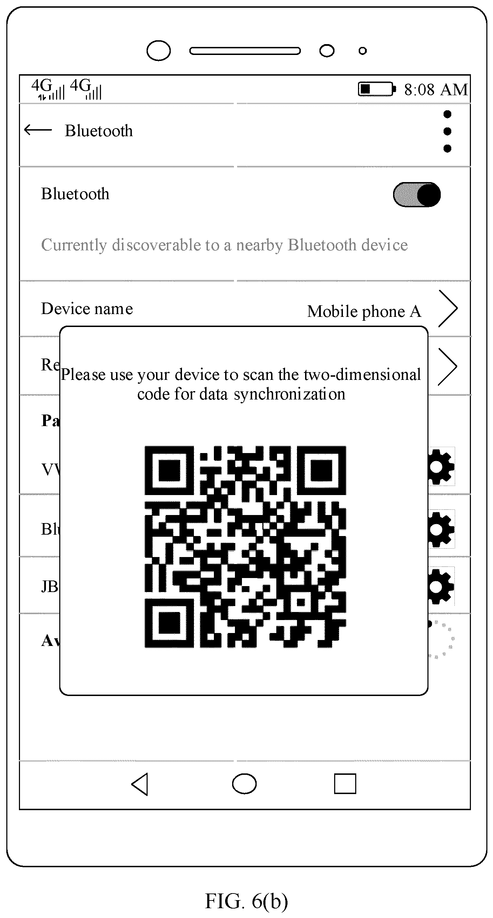

Refer to a GUI shown in FIG. 6(a). The GUI is another display interface of Bluetooth setting. After detecting that a user taps a sharing control, a mobile phone A may display a GUI shown in FIG. 6(b).

Refer to the GUI shown in FIG. 6(b). The GUI is another display interface of Bluetooth setting. The display interface includes two-dimensional code information generated by the mobile phone A, and the mobile phone A may prompt the user "Please use a device to scan the two-dimensional code, so as to implement data synchronization".

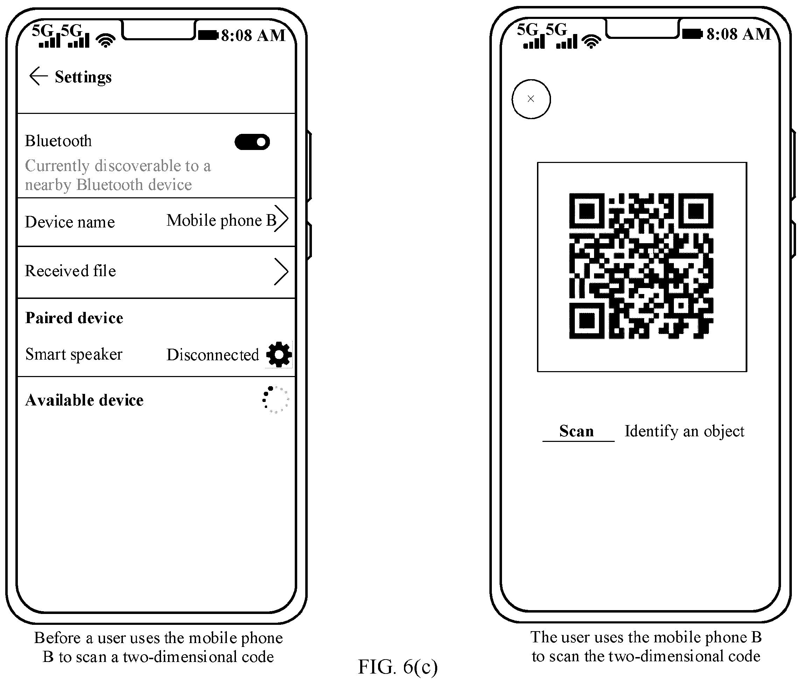

Refer to a GUI shown in FIG. 6(c). The GUI is a display interface of Bluetooth setting of a mobile phone B. Before the mobile phone B scans the two-dimensional code shown in FIG. 6(b), "Paired device" and "Available device" are displayed on the Bluetooth display interface of the mobile phone B. In the "Paired device", a Bluetooth device that has been connected to the mobile phone B may be displayed, and in the "Available device", a Bluetooth device that is currently found but has not been connected to the mobile phone B may be displayed. The "Paired device" include a smart speaker (the mobile phone B performed Bluetooth pairing previously with the smart speaker).

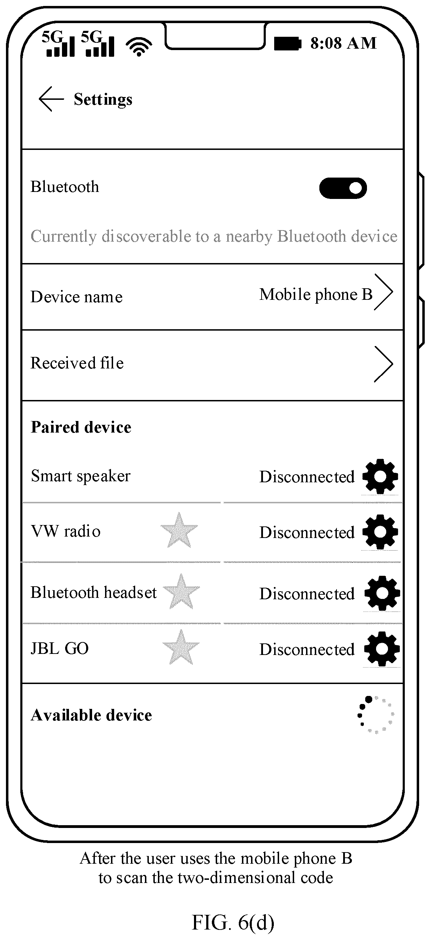

After scanning the two-dimensional code shown in FIG. 6(b), the mobile phone B may display a GUI shown in FIG. 6(d).

Refer to the GUI shown in FIG. 6(d). The GUI is another display interface of Bluetooth setting of the mobile phone B. After the mobile phone B scans the two-dimensional code, the mobile phone B may obtain pairing information of a corresponding device sent by the mobile phone A. The mobile phone B displays, in a paired device list, devices whose device names are "Smart speaker", "VW radio", "Bluetooth headset", and "JBL GO". The icon 408 may be displayed near the devices whose device names are "VW radio", "Bluetooth headset", and "JBL GO". The icon 408 may be used to prompt that the mobile phone B only performs virtual pairing with the devices whose device names are "VW radio", "Bluetooth headset", and "JBL GO", and does not implement physical pairing with the devices.

In this embodiment of this application, the mobile phone A may generate a two-dimensional code based on pairing information of a paired device. After scanning the two-dimensional code, the mobile phone B may obtain the pairing information of the paired device on the mobile phone A. This avoids a case in which the user needs to perform a corresponding operation on a Bluetooth device, and then, the Bluetooth device can perform Bluetooth connection to the mobile phone A only after the Bluetooth device enters a pairing available state, avoids an operation performed by the user when a new device is used to connect to the Bluetooth device, and improves user experience.

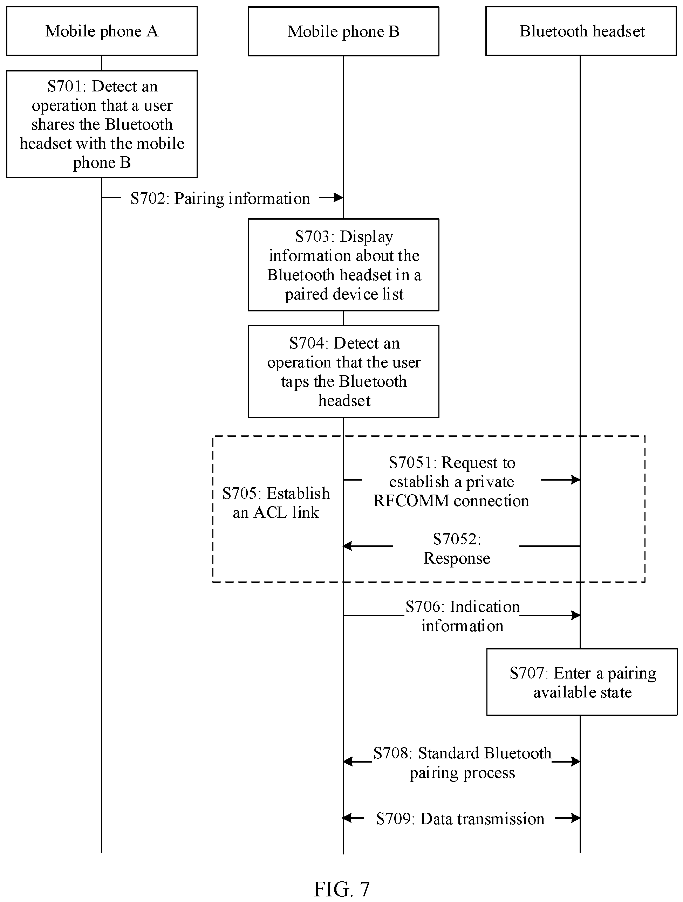

FIG. 7 is a schematic flowchart of an information sharing method according to an embodiment of this application. The method may include a data sharing process at a transmit end, and data receiving and data validation processes at a receive end.

The data sharing process at the transmit end includes device selection, data generation, and sharing and sending. A device selection process may be completed on a display interface at the transmit end (for example, a mobile phone A). For example, as shown in FIG. 5(b), when the mobile phone A detects that the user presses and holds a paired device, the mobile phone may display the reminder box 501. The user may select the device through the reminder box 501.

In an embodiment, only some of the paired devices displayed on the mobile phone A can be shared, and some paired devices may not be allowed to be shared. In this case, a device that is not allowed to be shared may not appear in the reminder box 501, or a device that is not allowed to be shared may appear, but the mobile phone A may prompt that the device is not allowed to be shared.

A data generation process may be performed after the user selects the Bluetooth devices that need to be shared and before the user selects a sharing mode and confirms sharing and sending. Pairing information that needs to be sent and shared is generated based on the pairing information of the Bluetooth devices (for example, "VW radio", "Bluetooth headset", and "JBL GO" in FIG. 5(b)) that needs to be shared.

It should be understood that the data generation process may also be triggered before the user selects the sharing mode and sends the data to the receive end.

It should be further understood that the pairing information generated in the data generation process may be encrypted, or may not be encrypted.

A sharing and sending process may be sending the pairing information to the receive end through various sharing paths supported by the transmit end. The sharing path includes sending modes such as near field communication (for example, Bluetooth, Wi-Fi, and NFC), an email, a social application, an SMS message, and the like.

In an embodiment, when sending the pairing information, the transmit end may specify the receive end, or may not specify the receive end.

In an embodiment, the transmit end may add anti-secondary use information to the pairing information, to improve security. For example, the transmit end may add a serial number to the to-be-sent pairing information, and the serial number may be used as an "anti-counterfeit identifier" for one-time use. For example, when a mobile phone B is paired with a Bluetooth headset based on the pairing information, if the Bluetooth headset finds out that the serial number is not used, a Bluetooth connection of the mobile phone B is received by the Bluetooth headset. When a mobile phone C is paired with the Bluetooth headset based on the pairing information, if the Bluetooth headset finds out that the serial number is used, a Bluetooth connection of the mobile phone C is rejected by the Bluetooth headset.

Alternatively, the mobile phone B may send the serial number to a server before being paired with the Bluetooth headset, and the server verifies whether the serial number is used. If the server indicates, to the mobile phone B, that the serial number is not used, the mobile phone B may perform silent pairing with the Bluetooth headset. Otherwise, the mobile phone B may not perform silent pairing with the Bluetooth headset.

In an embodiment, a transmit end device may further add validity period information of the pairing information to the pairing information, to improve security performance. For example, if the validity period information indicates that the pairing information is valid before a moment, when receiving the pairing information, the receive end may send the validity period information to the server. If the server indicates that the pairing information is before the moment, the receive end may complete silent pairing with the Bluetooth headset based on the pairing information. Otherwise, the receive end may not perform silent pairing with the Bluetooth headset.

A data receiving process at the receive end includes sharing receiving, data parsing, and information generation. Sharing receiving means that the receive end receives, in various sharing modes, the pairing information sent by the transmit end.

A data parsing result is used to obtain the pairing information. For example, as shown in FIG. 4(g), after the mobile phone B receives the pairing information sent by the mobile phone A, the mobile phone B may trigger data parsing. For example, as shown in FIG. 5(e), after the mobile phone B detects that the user taps the received pairing information in the WeChat application of the mobile phone B, the mobile phone B may trigger data parsing.

To improve security performance, the receive end may also destroy the pairing information after parsing the data. For example, the pairing information carries the validity period information, and after the pairing information exceeds the data validity period, the receive end may destroy the pairing information.

Information generation means that the receive end adds a corresponding device to a paired device list (or "Paired device" shown in FIG. 4(g)) based on the data parsing result. For example, if the mobile phone B obtains, through data parsing, that a device name of the Bluetooth device is "Bluetooth headset", and the mobile phone B obtains a device type of the Bluetooth device through data parsing, the mobile phone B may display, in the "Paired device", the device name "Bluetooth headset" of the Bluetooth device shared by the mobile phone A and an icon of the Bluetooth device.

In addition, before the mobile phone B is not paired with the Bluetooth device shared by the mobile phone A, a device newly added by the mobile phone B to the "Paired device" may have a special identifier, for example, the device is identified as a virtually paired device behind a device name "Bluetooth headset".

In an embodiment, the mobile phone B may further notify, through a display interface, the user of a result of adding by the mobile phone B. For example, while displaying "Bluetooth headset" in the "Paired device", the mobile phone B may prompt, through a reminder box, the user that "The Bluetooth device has been successfully added to the paired device, and pairing may be completed by tapping".

A data validation process at the receive end may include service triggering and silent pairing. A service trigger condition may be that the receive end detects an operation that the user taps the Bluetooth device shared by the mobile phone A.

Silent pairing is a process from "virtual pairing" to "physical pairing". When a silent pairing scenario is not met (for example, the pairing information has expired), the receive end automatically switches to regular pairing when performing pairing with the Bluetooth device, for example, asking the user to enter a password or press a button on the Bluetooth device.

In this embodiment of this application, to ensure data reliability from the transmit end to the receive end, the transmit end and the receive end may send and receive the pairing information through a confidential dedicated channel. For example, a dedicated application is installed on both the transmit end and the receive end. In this way, an instant communication channel can be established through the dedicated application, and the pairing information can be destroyed in time after being used, and does not need to be stored in a memory at the receive end, thereby achieving high security. For another example, the transmit end may send the pairing information to the receive end through a transmission channel such as WeChat or an email. However, the receive end needs to use the dedicated application to parse the pairing information.

In an embodiment, the transmit end may encrypt the sent pairing information. Only the receive end that knows a password can obtain the pairing information through decryption. For example, as shown in FIG. 4(g), after the mobile phone A detects an operation that the user taps the mobile phone B, the mobile phone A may prompt the user that a sharing password is 1234. After the mobile phone B receives the encrypted pairing information sent by the mobile phone A, the mobile phone B may prompt the user to enter the decryption password. If the mobile phone B detects that the user enters the correct password, the mobile phone B may decrypt the encrypted pairing information, to obtain the pairing information.

In an embodiment, as shown in FIG. 6(c), the two-dimensional code generated by the mobile phone A includes a device ID of the mobile phone A, the pairing information encrypted by using a private key of the mobile phone A, and a validity period of the pairing information. After the mobile phone B obtains the two-dimensional code by scanning, the mobile phone B may first determine whether the pairing information is within the validity period. If the two-dimensional code is out of the validity period, the mobile phone B may prompt the user that the two-dimensional code is invalid. If the two-dimensional code is within the validity period, the mobile phone B may request a public key of the mobile phone A from a cloud server by using the device ID of the mobile phone A (if the mobile phone B previously stores the public key of the mobile phone A, the mobile phone B may not need to request the public key of the mobile phone A from the cloud server again). After obtaining the public key of the mobile phone A from the cloud server, the mobile phone B may decrypt, by using the public key of the mobile phone A, the pairing information encrypted by using the private key of the mobile phone A, to obtain the pairing information.

Alternatively, the two-dimensional code generated by the mobile phone A includes a device ID of a Bluetooth headset, pairing information encrypted by using a private key of the Bluetooth headset, and a validity period of the pairing information. After the mobile phone B obtains the two-dimensional code by scanning, the mobile phone B may first determine whether the pairing information is within the validity period. If the two-dimensional code is out of the validity period, the mobile phone B may prompt the user that the two-dimensional code is invalid. If the two-dimensional code is within the validity period, the mobile phone B may request a public key of the Bluetooth headset from a cloud server by using the device ID of the Bluetooth headset. After obtaining the public key of the Bluetooth headset from the cloud server, the mobile phone B may decrypt, by using the public key of the Bluetooth headset, the pairing information encrypted by using the private key of the Bluetooth headset, to obtain the pairing information.

FIG. 7 is a schematic flowchart of a pairing information sharing method according to an embodiment of this application. As shown in FIG. 7, the method may be performed by a mobile phone A, a mobile phone B, and a Bluetooth headset. As shown in FIG. 7, the method 700 includes the following steps.

S701: The mobile phone A detects an operation that a user shares the Bluetooth headset with the mobile phone B.

For example, refer to FIG. 4(h). After detecting the operation that the user taps the device whose device name is "mobile phone B", the mobile phone A may send pairing information of the Bluetooth headset to the mobile phone B.

S702: The mobile phone A sends the pairing information of the Bluetooth headset to the mobile phone B.

In an embodiment, the pairing information of the Bluetooth headset may include identifier information of the Bluetooth headset.

For example, the pairing information sent by the mobile phone A to the mobile phone B includes a serial number of the Bluetooth headset. In this case, after obtaining the serial number of the Bluetooth headset, the mobile phone A may request the pairing information (for example, a MAC address, a device name, and a device type) of the Bluetooth headset from a cloud server by using the serial number. Alternatively, if the identifier information sent by the mobile phone A to the mobile phone B includes a MAC address of the Bluetooth headset, after obtaining the MAC address of the Bluetooth headset, the mobile phone A may request other pairing information (for example, a device name and a device type) of the Bluetooth headset from a cloud server by using the MAC address.

In an embodiment, the pairing information includes the MAC address, the device name, and the device type of the Bluetooth headset. In this case, the mobile phone B does not need to query the cloud server for other pairing information of the Bluetooth headset.

The mobile phone A may further encrypt the pairing information, and the mobile phone B may decrypt the encrypted pairing information in a manner of prompting the user to enter a password or scanning a two-dimensional code, to obtain the pairing information. It should be understood that for a process in which the mobile phone B prompts the user to enter the two-dimensional code or decrypts the encrypted pairing information by scanning the two-dimensional code, refer to the description in the foregoing embodiment. For brevity, details are not described herein again.

The mobile phone A sends anti-secondary forwarding information to the mobile phone B. The anti-secondary forwarding information is a serial number. After receiving the serial number, the mobile phone B may send the serial number to the cloud server, and the cloud server checks the serial number. If the cloud server determines that the serial number is not used, the cloud server may indicate, to the mobile phone B, that the serial number is not used, and the mobile phone B may perform silent pairing with the Bluetooth headset based on the pairing information. If the cloud server determines that the serial number is used, the cloud server indicates, to the mobile phone, that the serial number is used, and the mobile phone B does not use the pairing information to perform silent pairing with the Bluetooth headset.

In an embodiment, the mobile phone A may further send validity period information to the mobile phone B. After receiving the validity period information, to avoid a deviation of a local clock, the mobile phone B may send the validity period information to the cloud server, and the cloud server determines whether the validity period information is valid. If the cloud server determines that the validity period information is valid, the cloud server may indicate, to the mobile phone B, that the pairing information is valid; otherwise, the cloud server may indicate, to the mobile phone B, that the pairing information is invalid.

S703: The mobile phone B displays information about the Bluetooth headset in a paired device list.

In an embodiment, if the pairing information received by the mobile phone B and sent by the mobile phone A includes a device address and the device name of the Bluetooth headset, the mobile phone B may display the device name of the Bluetooth headset in the paired device list of the mobile phone B.

For example, in FIG. 4(g), after receiving the pairing information of the Bluetooth headset sent by the mobile phone A, the mobile phone B displays, in the paired device list of the mobile phone B, the Bluetooth device whose device name is "Bluetooth headset".

In an embodiment, the mobile phone B further includes prompt information, and the prompt information is further used to prompt that although the Bluetooth headset is displayed in the paired device list, the mobile phone B did not perform Bluetooth pairing with the Bluetooth headset.

For example, in FIG. 4(g), the icon 408 is included near the "Bluetooth headset" displayed in the paired device list of the mobile phone B. The icon 408 may be used to prompt that although the Bluetooth headset is displayed in the paired device list, the mobile phone B did not perform Bluetooth pairing with the Bluetooth headset.

S704: The mobile phone B displays, in the paired device list, the Bluetooth device whose device name is "Bluetooth headset", and detects an operation that the user taps the Bluetooth headset.

For example, as shown in FIG. 4(h), after receiving the pairing information, the mobile phone B may display, in "Paired device", the Bluetooth device whose device name is "Bluetooth headset". It should be understood that before the mobile phone B establishes a Bluetooth connection to the "Bluetooth headset", the mobile phone B and the Bluetooth headset are in a virtual pairing state.

In an embodiment, if the mobile phone A sends the validity period information of the pairing information to the mobile phone B, if the mobile phone B determines that the pairing information is within the validity period, the mobile phone B may display the information about the Bluetooth headset in the paired list. If the mobile phone B determines that the pairing information is not within the validity period, the mobile phone may not display the information about the Bluetooth headset in the paired list, or the mobile phone B may display the information about the Bluetooth headset and prompt information in the paired list, where the prompt information is used to prompt that the pairing information of the Bluetooth headset has expired.

S705: The mobile phone B establishes an ACL link with the Bluetooth headset.

In an embodiment, that the mobile phone B establishes the ACL link with the Bluetooth headset includes: The mobile phone B establishes a private RFCOMM connection to the Bluetooth headset. In this embodiment of this application, that the mobile phone B establishes the private RFCOMM connection to the Bluetooth headset may include the following steps.

S7051: The mobile phone B requests the Bluetooth headset to establish the private RFCOMM connection.

For example, when the mobile phone B detects the operation that the user taps the "Bluetooth headset" in the paired old device list, the mobile phone B may trigger the request to the Bluetooth headset to establish the private RFCOMM connection.

S7052: The Bluetooth headset sends a response to the mobile phone B, where the response message is used to indicate that the connection request of the mobile phone B is accepted.

It should be understood that, after the mobile phone B receives the response, the private RFCOMM connection is established between the mobile phone B and the Bluetooth headset.

It should be further understood that the mobile phone B may send indication information to the Bluetooth headset by using a private RFCOMM protocol, where the indication information is used to indicate the Bluetooth headset to enter a pairing available mode. Alternatively, the mobile phone B may send the indication information to the Bluetooth headset by using a Bluetooth serial port profile (serial port profile, SPP), an L2CAP, a security manager protocol (security manage protocol, SMP) Bluetooth low energy generic attribute profile (Bluetooth low energy generic attribute profile, BLE GATT), Wi-Fi, ultra-wideband (ultra-wideband, UWB), an infrared data association (infrared data association, IrDA), or the like.

It should be understood that the ACL link is a bottom-layer asynchronous communication physical link, the RECOMM connection is a basic upper-layer profile (profile) connection, and the RECOMM connection uses the ACL link.

In an embodiment, after the mobile phone B receives the pairing information (for example, the pairing information includes the MAC address of the Bluetooth headset) of the Bluetooth headset sent by the mobile phone A, the mobile phone B may establish the ACL link with the Bluetooth headset. After the mobile phone B establishes the ACL link with the Bluetooth headset, the mobile phone B may verify the validity period of the pairing information. Alternatively, the mobile phone B may first verify the validity period. If the mobile phone B determines that the pairing information is within the validity period, the mobile phone B may establish the ACL link with the Bluetooth headset.

S706: The mobile phone B sends the indication information to the Bluetooth headset over the ACL link, where the indication information is used to indicate the Bluetooth headset to enter the pairing available mode.

S707: After receiving the indication information, the Bluetooth headset enters the pairing available mode.

S708: The mobile phone B and the Bluetooth headset perform a standard Bluetooth pairing process.

It should be understood that S707 is described by using the Bluetooth standard pairing process. A process of performing pairing between the mobile phone B and the Bluetooth headset is not limited in embodiments of this application.

S709: The mobile phone B and the Bluetooth headset exchange data with each other.

For example, when the mobile phone B answers a call by using the Bluetooth headset, an HFP connection may be established between the mobile phone and a primary earbud.

For example, when the mobile phone B listens to music or watches a video by using the Bluetooth headset, an A2DP connection may be established between the mobile phone and the primary earbud.

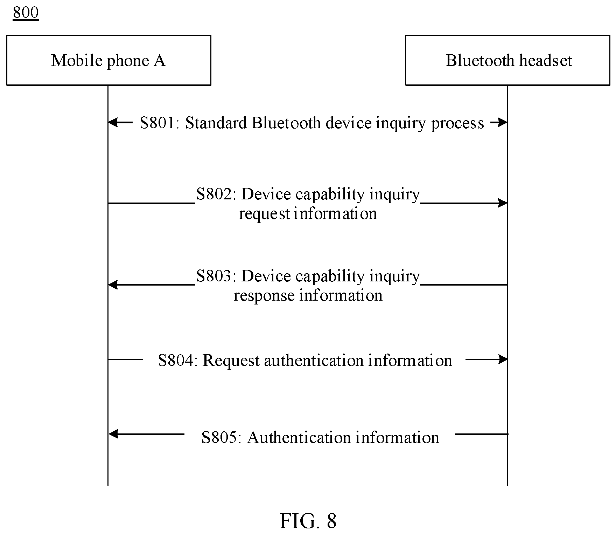

FIG. 8 is a schematic diagram of a process of establishing a connection between a mobile phone A and a Bluetooth device according to an example not forming part of the invention. Descriptions are provided by using an example in which the Bluetooth device is the foregoing Bluetooth headset. As shown in FIG. 8, the process includes the following steps.

S801: The mobile phone A and the Bluetooth headset perform a standard Bluetooth device inquiry (inquiry) process.

For example, refer to FIG. 4(e). After detecting the operation that the user taps the Bluetooth device whose device name is "Bluetooth headset", the mobile phone A triggers the mobile phone A and the Bluetooth headset to perform the standard Bluetooth device inquiry process.

It should be understood that the process may be that the Bluetooth headset is connected to the mobile phone A through proximity discovery when the Bluetooth headset is taken out from a headset box for the first time, or may be that the mobile phone A is connected to the Bluetooth headset after the mobile phone A discovers the Bluetooth headset by actively searching for a Bluetooth device.

In an example, that the mobile phone and the Bluetooth headset establish the standard Bluetooth pairing process includes: The mobile phone establishes an ACL link with the Bluetooth headset; and the mobile phone and the Bluetooth headset perform a pairing/SDP/encryption process.

S802: The mobile phone A sends device capability inquiry request information to the Bluetooth headset, where the device capability inquiry request information is used to query whether the Bluetooth headset supports sharing.

For example, the mobile phone A may carry a specific field in an echo message at a Bluetooth protocol layer, and the specific field may be used to query whether the Bluetooth headset supports sharing.

For example, the mobile phone A may also carry the device capability inquiry request information in a new message at an app layer.

It should be understood that information interaction in S802 to S805 may be interaction of private commands.

S803: The Bluetooth headset sends device capability inquiry response information to the mobile phone A, where the device capability inquiry response information is used to indicate that the Bluetooth headset supports sharing.

S804: The mobile phone A requests authentication information Token from the Bluetooth headset.

For example, the mobile phone A may carry a specific field in the echo message at the Bluetooth protocol layer, and the specific field may be used to request authentication information.

For example, the mobile phone A may also carry the request information in the new message at the app layer, to request the authentication information from the Bluetooth headset.

It should be understood that both the echo message at the Bluetooth protocol layer and the message at the app layer need to be exchanged over an encrypted link between the mobile phone A and the Bluetooth headset.

For example, the authentication information Token is not limited to a password, an identity code, an encrypted character string, and the like.

S805: The Bluetooth headset sends the authentication information Token to the mobile phone A.

Then, the mobile phone A may exchange data with the Bluetooth headset, and a user may use the Bluetooth headset to listen to music, answer a call, and the like.

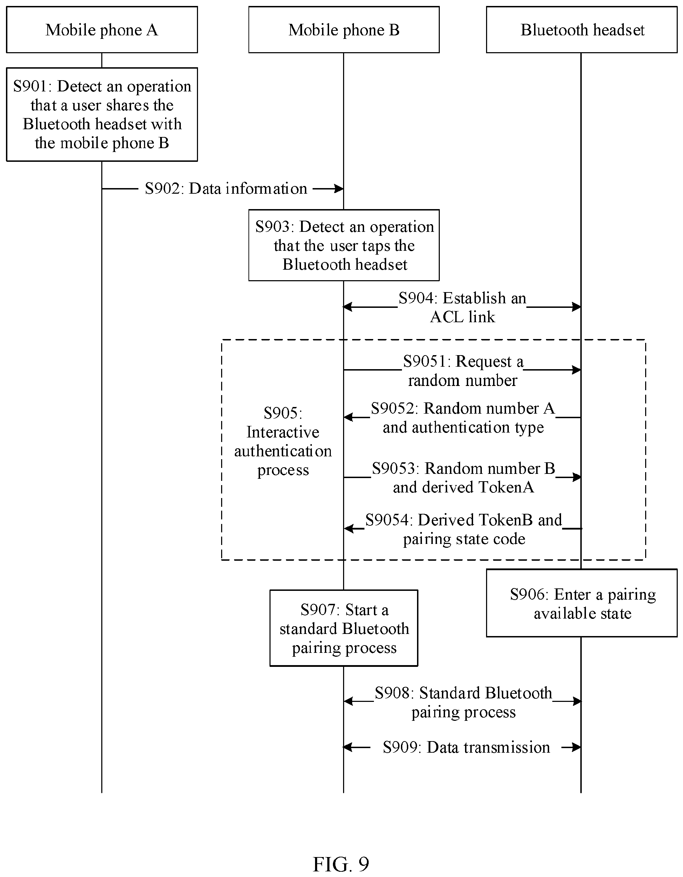

FIG. 9 is a schematic diagram of a process of sharing the Bluetooth device with the mobile phone B by using the mobile phone A according to an example not forming part of the invention. As shown in FIG. 9, the process includes the following steps.

S901: The mobile phone A detects the operation that the user shares the Bluetooth headset with the mobile phone B.

For example, refer to FIG. 4(h). After detecting the operation that the user taps the device whose device name is "mobile phone B", the mobile phone A may send the pairing information of the Bluetooth headset to the mobile phone B.

S902: The mobile phone A sends the pairing information of the Bluetooth headset to the mobile phone B.

It should be understood that for the processes of S901 and S902, refer to the foregoing processes of S701 and S702. For brevity, details are not described herein again.

In an example, the mobile phone A may further send the authentication information Token to the mobile phone B. Before pairing is performed between the Bluetooth headset and the mobile phone B, the mobile phone B may use the authentication information to perform interactive authentication with the Bluetooth headset.

S903: The mobile phone B displays, in the paired device list, the Bluetooth device whose device name is "Bluetooth headset", and detects the operation that the user taps the Bluetooth headset.

S904: The mobile phone B establishes the ACL link with the Bluetooth headset.

It should be understood that, in this case, the mobile phone B obtains the MAC address of the Bluetooth headset from the pairing information, and the mobile phone B may first establish the ACL link with the Bluetooth headset.

S905: The mobile phone B and the Bluetooth headset perform the interactive authentication process.

In this example, the interactive authentication process includes but is not limited to the following three manners:

### Manner 1

The mobile phone B sends the authentication information to the Bluetooth headset over the ACL link. If the Bluetooth headset determines that the authentication information is the same as the authentication information previously sent to the mobile phone A, the interactive authentication between the mobile phone B and the Bluetooth headset succeeds. In this manner, all authentication information can be sent to the Bluetooth headset for authentication, thereby reducing information exchange in an authentication process.

### Manner 2

The mobile phone B sends a part of the authentication information to the Bluetooth headset over the ACL link, and the Bluetooth headset determines whether the part of the authentication information is correct. If the part of the authentication information is correct, the Bluetooth headset may continue to send a scan request (scan request) to the mobile phone B, where the scan request is used to request the other part of the authentication information. After receiving the scan request, the mobile phone B may send a scanning response (scan response) to the Bluetooth headset, where the scan response includes the other encrypted part of the authentication information.

### Manner 3

The authentication process may include the following steps.

S9051: The mobile phone B requests a random number from the Bluetooth headset.

S9052: The Bluetooth headset sends a random number A and an authentication type to the mobile phone B. The authentication type is used to indicate that the mobile phone B performs identity authentication.

S9053: The mobile phone B sends a random number B and derived TokenA to the Bluetooth headset.

The derived TokenA is obtained by encrypting the authentication information Token by the mobile phone B by using the random number A.

S9054: The Bluetooth headset sends derived TokenB and a pairing state code to the mobile phone B, where the pairing state code is used to indicate the Bluetooth headset to enter a pairing available state.

After receiving the derived TokenA, if the Bluetooth headset can obtain, through parsing the random number A based on the authentication information, the Bluetooth headset may determine that the mobile phone is a trusted device. In this case, the Bluetooth headset may enter the pairing available state, and send the derived TokenB to the mobile phone B. After the mobile phone B obtains, through parsing, the random number B from the derived TokenB based on the authentication information Token, the mobile phone B starts a standard Bluetooth pairing process.

It should be understood that a process of performing the interactive authentication between the mobile phone B and the Bluetooth headset in S905 is similar to check of the validity period in the foregoing embodiments. The interactive authentication may be understood as an implementation of validity check of the pairing information.

In an example, the mobile phone B may also first perform the interactive authentication with the Bluetooth headset. After the interactive authentication between the mobile phone B and the Bluetooth headset succeeds, the mobile phone B may establish the ACL link with the Bluetooth headset.

S906: After determining that the interactive authentication succeeds, the Bluetooth headset enters the pairing available mode.

It should be understood that the process in which the mobile phone B performs the interactive authentication with the Bluetooth headset in S905 and S906 is optional. In this example, the mobile phone B may alternatively not perform interactive authentication with the Bluetooth headset.

S907: After determining that the interactive authentication succeeds, the mobile phone B starts the standard Bluetooth pairing process.

S908: The mobile phone B and the Bluetooth headset perform the standard Bluetooth pairing process.

S909: The mobile phone B and the Bluetooth headset exchange data with each other.

For example, when the mobile phone B answers a call by using the Bluetooth headset, an HFP connection may be established between the mobile phone and a primary earbud.

For example, when the mobile phone B listens to music or watches a video by using the Bluetooth headset, an A2DP connection may be established between the mobile phone and the primary earbud.

In this example, when the Bluetooth headset is connected to the mobile phone A last time and needs to be connected to the mobile phone B, the mobile phone A may share the pairing information and authentication information of the Bluetooth headset with the mobile phone B, and the mobile phone B may first perform authentication with the Bluetooth headset based on the authentication information sent by the mobile phone A. Bluetooth pairing is performed after the authentication succeeds. This helps improve security when the mobile phone B performs pairing with the Bluetooth headset. In addition, this avoids a process in which the user needs to press a function button on the Bluetooth headset and the Bluetooth headset can perform, only after entering the pairing available state, pairing with the mobile phone B, reduces an operation performed by the user when a new device is used to connect to the Bluetooth headset, and improves user experience.

In the foregoing method 900, the Bluetooth connection between the mobile phone B and the Bluetooth headset is established in a manner of silent pairing triggered by the mobile phone B. In this example, silent pairing may also be triggered by using a headset. For example, when sending the pairing information to the mobile phone B, the mobile phone A may also request the mobile phone B to send a MAC address of the mobile phone B to the mobile phone A. After obtaining the MAC address of the mobile phone B, the mobile phone A may send the MAC address of the mobile phone B to the Bluetooth headset. Next time when the Bluetooth headset detects that the headset case is opened, the Bluetooth headset may directly initiate a pairing request to the mobile phone B.

FIG. 10 is a schematic flowchart of a pairing information sharing method according to an embodiment of this application. As shown in FIG. 10, the method may be executed by a first electronic device (for example, the mobile phone A), a second electronic device (for example, the mobile phone B), and an accessory device (for example, the Bluetooth headset). As shown in FIG. 10, the method 1000 includes the following steps.

S1001: The first electronic device displays a first interface, where the first interface includes a first device list, a device in the first device list is a device performed Bluetooth pairing with the first electronic device, and the first device list includes the accessory device.

For example, refer to the GUI shown in FIG. 4(e), the paired device list of the mobile phone A includes information about the Bluetooth headset.

S1002: The second electronic device displays a second interface, where the second interface includes a second device list, a device in the second device list is a device performed Bluetooth pairing with the second electronic device, and the second device list does not include the accessory device.

For example, refer to the GUI shown in FIG. 4(f), the paired device list of the mobile phone B does not include the information about the Bluetooth headset.

S1003: The first electronic device sends pairing information of the accessory device to the second electronic device when detecting a first operation performed by a user on the first interface.

For example, refer to the GUI shown in FIG. 4(g). The first operation may be an operation that the user selects the mobile phone B from the shareable device list. When the mobile phone A detects the operation, the mobile phone A may send the pairing information of the Bluetooth headset to the mobile phone B by using a short-range wireless communication technology (for example, Wi-Fi or Bluetooth).

Optionally, the method 1000 further includes: Before performing Bluetooth pairing with the accessory device, the second electronic device displays prompt information on the second interface, where the prompt information is used to prompt that the second electronic device does not perform Bluetooth pairing with the accessory device; and the second electronic device hides the prompt information when Bluetooth pairing with the accessory device is completed.

For example, refer to FIG. 4(g). Before the mobile phone B performs Bluetooth pairing with the Bluetooth headset, the mobile phone B may display the icon 408 on the interface. The icon 408 is used to indicate that although the Bluetooth headset is displayed in the **paired** device list of the mobile phone B, the mobile phone B did not perform Bluetooth pairing with the Bluetooth headset. Refer to FIG. 4(g) and FIG. 4(j). After the mobile phone B completes Bluetooth pairing with the Bluetooth headset, the mobile phone B may hide the icon 408.

Optionally, the method 1000 further includes: Before performing Bluetooth pairing with the accessory device, the second electronic device sends indication information to the accessory device, where the indication information is used to indicate the accessory device to enter a pairing available mode. The accessory device enters the pairing available mode based on the indication information.

In this embodiment of this application, before performing Bluetooth pairing with the accessory device, the second electronic device may indicate the accessory device to enter the pairing available mode. This helps avoid a process in which the user initializes the accessory device (for example, the user places the Bluetooth headset in a headset box and presses and holds a function button on the headset box), avoid user intervention in a process in which the second electronic device performs pairing with the accessory device, and helps improve user experience.

S1004: The second electronic device displays the accessory device in the second device list based on the pairing information.

For example, refer to the GUI shown in FIG. 4(g), after receiving the pairing information, the mobile phone B may display the information about the Bluetooth headset in the paired device list.

S1005: The second electronic device performs Bluetooth pairing with the accessory device when detecting an operation that the user selects the accessory device from the second device list.

For example, refer to GUIs shown in FIG. 4(h) to FIG. 4(j), after the mobile phone B detects an operation that the user selects the Bluetooth headset from the paired device list, the mobile phone B may perform Bluetooth pairing with the Bluetooth headset. The method further includes, before the performing Bluetooth pairing with the accessory device: receiving a serial number corresponding to the pairing information sent by the another electronic device; and determining that the serial number is not used.

embodiments of this application can be implemented by a chip. The chip is included in an electronic device. The chip further includes one or more processors, one or more memories, and one or more computer programs. The one or more computer programs are stored in the one or more memories. The one or more computer programs include instructions. When the instructions are executed by the one or more processors, the chip is enabled to perform the steps in the foregoing information sharing method embodiments.

A computer storage medium, including computer instructions can be provided. When the computer instructions are run on an electronic device, the electronic device is enabled to perform the information sharing methods in the foregoing embodiments.

A computer program product can be provided. When the computer program product runs on an electronic device, the electronic device is enabled to perform the information sharing methods in the foregoing embodiments.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed operating process of the described system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the current technology, or some of the technical solutions may be implemented in the form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application, which is defined by the appended claims.
perform the information sharing methods in the foregoing embodiments.

An embodiment of this application further provides a computer program product. When the computer program product runs on an electronic device, the electronic device is enabled to perform the information sharing methods in the foregoing embodiments.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed operating process of the described system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the current technology, or some of the technical solutions may be implemented in the form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A system, wherein the system comprises a first electronic device (A), a second electronic device (B), and an accessory device, wherein
the first electronic device (A) is configured to display a first interface,
the second electronic device (B) is configured to display a second interface;
the first electronic device (A) is further configured to send pairing information of the accessory device to the second electronic device (B) when detecting a first operation performed by a user on the first interface;
the second electronic device (B) is further configured to perform Bluetooth pairing with the accessory device when detecting an operation that the user selects the accessory device;
the first interface comprises a first device list, a device in the first device list is a device that performed Bluetooth pairing with the first electronic device (A), and the first device list comprises the accessory device;
the second interface comprises a second device list, a device in the second device list is a device that performed Bluetooth pairing with the second electronic device (B), and the second device list does not comprise the accessory device;
the second electronic device (B) is further configured to display the accessory device in the second device list based on the pairing information;
the operation that the user selects the accessory device comprises the user selecting the accessory device from the second device list;
the first electronic device (A) is further configured to: in response to the first operation, send a serial number corresponding to the pairing information to the second electronic device (B); and
the second electronic device (B) is further configured to: before performing Bluetooth pairing with the accessory device, determine that the serial number is not used.

2. The system according to claim 1, wherein the second electronic device (B) is further configured to: before performing Bluetooth pairing with the accessory device, display prompt information on the second interface, wherein the prompt information is used to prompt that the second electronic device (B) does not perform Bluetooth pairing with the accessory device; and
hide the prompt information when completing Bluetooth pairing with the accessory device.

3. The system according to claim 1 or 2, wherein the second electronic device (B) is further configured to: before performing Bluetooth pairing with the accessory device, send indication information to the accessory device, wherein the indication information is used to indicate the accessory device to enter a pairing available mode; and
the accessory device is further configured to enter the pairing available mode based on the indication information.

4. The system according to any one of claims 1 to 3, wherein the first electronic device (A) is further configured to send validity period information of the pairing information to the second electronic device (B) in response to the first operation, wherein the validity period information is used to indicate a validity period of the pairing information; and
The second electronic device (B) is further configured to: before performing Bluetooth pairing with the accessory device, determine that the pairing information is within the validity period.

5. The system according to any one of claims 1 to 4, wherein the first electronic device (A) is further configured to send authentication information to the second electronic device (B) in response to the first operation, wherein the authentication information is information obtained by the first electronic device (A) from the accessory device; and
the second electronic device (B) is further configured to: before performing Bluetooth pairing with the accessory device, perform interactive authentication with the accessory device based on the authentication information; and
after the interactive authentication with the accessory device succeeds, perform Bluetooth pairing with the accessory device.

6. The system according to any one of claims 1 to 5, wherein the first electronic device (A) and the second electronic device (B) are devices under a same account.

7. The system according to any one of claims 1 to 6, wherein the pairing information comprises one or more of the following information: a media access control MAC address of the accessory device, a device identifier of the accessory device, or authorization information.

8. An information sharing method, wherein the method is performed at an electronic device (100), and the method comprises:
displaying (S1002) a first interface;
receiving pairing information of an accessory device sent by another electronic device; and
performing (S1005) Bluetooth pairing with the accessory device when detecting an operation that a user selects the accessory device,
wherein the first interface comprises a device list, a device in the device list is a device that performed Bluetooth pairing with the electronic device (100), and the device list does not comprise the accessory device;
and wherein the method further comprises:
displaying (S1004) the accessory device in the device list based on the pairing information;
the performing (S1005) Bluetooth pairing further comprises detecting an operation that the user selects the accessory device from the device list; and
before the performing Bluetooth pairing with the accessory device, the method further comprises:
receiving a serial number corresponding to the pairing information sent by the another electronic device; and
determining that the serial number is not used.

9. The method according to claim 8, wherein the method further comprises:
before performing Bluetooth pairing with the accessory device, displaying prompt information on the first interface, wherein the prompt information is used to prompt that the electronic device (100) does not perform Bluetooth pairing with the accessory device; and
hiding the prompt information when completing Bluetooth pairing with the accessory device.

10. The method according to claim 8 or 9, wherein before the performing Bluetooth pairing with the accessory device, the method further comprises:
sending indication information to the accessory device, wherein the indication information is used to indicate the accessory device to enter a pairing available mode.

11. The method according to any one of claims 8 to 10, wherein before the performing Bluetooth pairing with the accessory device, the method further comprises:
receiving validity period information of the pairing information sent by the another electronic device, wherein the validity period information is used to indicate a validity period of the pairing information; and
determining that the pairing information is within the validity period.

12. The method according to any one of claims 8 to 11, wherein before the performing Bluetooth pairing with the accessory device, the method further comprises:
receiving authentication information sent by the another electronic device, wherein the authentication information is information obtained by the another electronic device from the accessory device; and
performing interactive authentication with the accessory device based on the authentication information, wherein
the performing Bluetooth pairing with the accessory device comprises:
after the interactive authentication between the electronic device (100) and the accessory device succeeds, performing Bluetooth pairing between the electronic device (100) and the accessory device.

13. The method according to any one of claims 8 to 12, wherein the electronic device (100) and the another electronic device are devices under a same account.

## Patentansprüche

1. System, wobei das System eine erste elektronische Vorrichtung (A), eine zweite elektronische Vorrichtung (B) und eine Zubehörvorrichtung umfasst, wobei
die erste elektronische Vorrichtung (A) dazu konfiguriert ist, eine erste Schnittstelle anzuzeigen;
die zweite elektronische Vorrichtung (B) dazu konfiguriert ist, eine zweite Schnittstelle anzuzeigen;
die erste elektronische Vorrichtung (A) ferner dazu konfiguriert ist, Kopplungsinformationen der Zubehörvorrichtung an die zweite elektronische Vorrichtung (B) zu senden, wenn eine erste Operation, die durch einen Benutzer an der ersten Schnittstelle durchgeführt wird, erfasst wird;
die zweite elektronische Vorrichtung (B) ferner dazu konfiguriert ist, eine Bluetooth-Kopplung mit der Zubehörvorrichtung durchzuführen, wenn eine Operation, dass der Benutzer die Zubehörvorrichtung auswählt, erfasst wird;
die erste Schnittstelle eine erste Vorrichtungsliste umfasst, eine Vorrichtung in der ersten Vorrichtungsliste eine Vorrichtung ist, die eine Bluetooth-Kopplung mit der ersten elektronischen Vorrichtung (A) durchgeführt hat, und die erste Vorrichtungsliste die Zubehörvorrichtung umfasst;
die zweite Schnittstelle eine zweite Vorrichtungsliste umfasst, eine Vorrichtung in der zweiten Vorrichtungsliste eine Vorrichtung ist, die eine Bluetooth-Kopplung mit der zweiten elektronischen Vorrichtung (B) durchgeführt hat, und die zweite Vorrichtungsliste die Zubehörvorrichtung nicht umfasst;
die zweite elektronische Vorrichtung (B) ferner dazu konfiguriert ist, die Zubehörvorrichtung in der zweiten Vorrichtungsliste basierend auf den Kopplungsinformationen anzuzeigen;
die Operation, dass der Benutzer die Zubehörvorrichtung auswählt, umfasst, dass der Benutzer die Zubehörvorrichtung aus der zweiten Vorrichtungsliste auswählt;
die erste elektronische Vorrichtung (A) ferner dazu konfiguriert ist: als Reaktion auf die erste Operation eine Seriennummer, die den Kopplungsinformationen entspricht, an die zweite elektronische Vorrichtung (B) zu senden; und
die zweite elektronische Vorrichtung (B) ferner dazu konfiguriert ist: vor dem Durchführen der Bluetooth-Kopplung mit der Zubehörvorrichtung zu bestimmen, dass die Seriennummer nicht verwendet wird.

2. System nach Anspruch 1, wobei die zweite elektronische Vorrichtung (B) ferner dazu konfiguriert ist: vor dem Durchführen der Bluetooth-Kopplung mit der Zubehörvorrichtung Hinweisinformationen an der zweiten Schnittstelle anzuzeigen, wobei die Hinweisinformationen verwendet werden, um darauf hinzuweisen, dass die zweite elektronische Vorrichtung (B) keine Bluetooth-Kopplung mit der Zubehörvorrichtung durchführt; und die Hinweisinformationen auszublenden, wenn die Bluetooth-Kopplung mit der Zubehörvorrichtung abgeschlossen wird.

3. System nach Anspruch 1 oder 2, wobei die zweite elektronische Vorrichtung (B) ferner dazu konfiguriert ist: vor dem Durchführen der Bluetooth-Kopplung mit der Zubehörvorrichtung Angabeinformationen an die Zubehörvorrichtung zu senden, wobei die Angabeinformationen verwendet werden, um der Zubehörvorrichtung anzugeben, in einen Kopplungsverfügbarkeitsmodus einzutreten; und
die Zubehörvorrichtung ferner dazu konfiguriert ist, basierend auf den Angabeinformationen in den Kopplungsverfügbarkeitsmodus einzutreten.

4. System nach einem der Ansprüche 1 bis 3, wobei die erste elektronische Vorrichtung (A) ferner dazu konfiguriert ist, Gültigkeitsdauerinformationen der Kopplungsinformationen als Reaktion auf die erste Operation an die zweite elektronische Vorrichtung (B) zu senden, wobei die Gültigkeitsdauerinformationen verwendet werden, um eine Gültigkeitsdauer der Kopplungsinformationen anzugeben; und
die zweite elektronische Vorrichtung (B) ferner dazu konfiguriert ist: vor dem Durchführen der Bluetooth-Kopplung mit der Zubehörvorrichtung zu bestimmen, dass die Kopplungsinformationen innerhalb der Gültigkeitsdauer liegen.

5. System nach einem der Ansprüche 1 bis 4, wobei die erste elektronische Vorrichtung (A) ferner dazu konfiguriert ist, Authentifizierungsinformationen als Reaktion auf die erste Operation an die zweite elektronische Vorrichtung (B) zu senden, wobei die Authentifizierungsinformationen Informationen sind, die durch die erste elektronische Vorrichtung (A) von der Zubehörvorrichtung erhalten werden; und
die zweite elektronische Vorrichtung (B) ferner dazu konfiguriert ist: vor dem Durchführen der Bluetooth-Kopplung mit der Zubehörvorrichtung eine interaktive Authentifizierung mit der Zubehörvorrichtung basierend auf den Authentifizierungsinformationen durchzuführen; und
nachdem die interaktive Authentifizierung mit der Zubehörvorrichtung erfolgreich ist, die Bluetooth-Kopplung mit der Zubehörvorrichtung durchzuführen.

6. System nach einem der Ansprüche 1 bis 5, wobei die erste elektronische Vorrichtung (A) und die zweite elektronische Vorrichtung (B) Vorrichtungen unter einem gleichen Konto sind.

7. System nach einem der Ansprüche 1 bis 6, wobei die Kopplungsinformationen eine oder mehrere der folgenden Informationen umfassen: eine Medienzugriffssteuerungs(MAC)-Adresse der Zubehörvorrichtung, eine Vorrichtungskennung der Zubehörvorrichtung oder Autorisierungsinformationen.

8. Informationsfreigabeverfahren, wobei das Verfahren an einer elektronischen Vorrichtung (100) durchgeführt wird und das Verfahren umfasst:
Anzeigen (S1002) einer ersten Schnittstelle;
Empfangen von Kopplungsinformationen einer Zubehörvorrichtung, die durch eine andere elektronische Vorrichtung gesendet werden; und
Durchführen (S1005) der Bluetooth-Kopplung mit der Zubehörvorrichtung, wenn eine Operation, dass ein Benutzer die Zubehörvorrichtung auswählt, erfasst wird, wobei die erste Schnittstelle eine Vorrichtungsliste umfasst, eine Vorrichtung in der Vorrichtungsliste eine Vorrichtung ist, die die Bluetooth-Kopplung mit der elektronischen Vorrichtung (100) durchgeführt hat, und die Vorrichtungsliste die Zubehörvorrichtung nicht umfasst;
und wobei das Verfahren ferner umfasst:
Anzeigen (S1004) der Zubehörvorrichtung in der Vorrichtungsliste basierend auf den Kopplungsinformationen;
wobei das Durchführen (S1005) der Bluetooth-Kopplung ferner das Erfassen einer Operation, dass der Benutzer die Zubehörvorrichtung aus der Vorrichtungsliste auswählt, umfasst; und
wobei das Verfahren vor dem Durchführen der Bluetooth-Kopplung mit der Zubehörvorrichtung ferner umfasst:
Empfangen einer Seriennummer, die den Kopplungsinformationen entspricht, die durch die andere elektronische Vorrichtung gesendet wird; und
Bestimmen, dass die Seriennummer nicht verwendet wird.

9. Verfahren nach Anspruch 8, wobei das Verfahren ferner umfasst:
vor dem Durchführen der Bluetooth-Kopplung mit der Zubehörvorrichtung, Anzeigen von Hinweisinformationen an der ersten Schnittstelle, wobei die Hinweisinformationen verwendet werden, um darauf hinzuweisen, dass die elektronische Vorrichtung (100) keine Bluetooth-Kopplung mit der Zubehörvorrichtung durchführt; und
Ausblenden der Hinweisinformationen, wenn die Bluetooth-Kopplung mit der Zubehörvorrichtung abgeschlossen wird.

10. Verfahren nach Anspruch 8 oder 9, wobei das Verfahren vor dem Durchführen der Bluetooth-Kopplung mit der Zubehörvorrichtung ferner umfasst:
Senden von Angabeinformationen an die Zubehörvorrichtung, wobei die Angabeinformationen verwendet werden, um der Zubehörvorrichtung anzugeben, in einen Kopplungsverfügbarkeitsmodus einzutreten.

11. Verfahren nach einem der Ansprüche 8 bis 10, wobei das Verfahren vor dem Durchführen der Bluetooth-Kopplung mit der Zubehörvorrichtung ferner umfasst:
Empfangen von Gültigkeitsdauerinformationen der Kopplungsinformationen, die durch die andere elektronische Vorrichtung gesendet werden, wobei die Gültigkeitsdauerinformationen verwendet werden, um eine Gültigkeitsdauer der Kopplungsinformationen anzugeben; und
Bestimmen, dass die Kopplungsinformationen innerhalb der Gültigkeitsdauer liegen.

12. Verfahren nach einem der Ansprüche 8 bis 11, wobei das Verfahren vor dem Durchführen der Bluetooth-Kopplung mit der Zubehörvorrichtung ferner umfasst:
Empfangen von Authentifizierungsinformationen, die durch die andere elektronische Vorrichtung gesendet werden, wobei die Authentifizierungsinformationen Informationen sind, die durch die andere elektronische Vorrichtung von der Zubehörvorrichtung erhalten werden; und
Durchführen der interaktiven Authentifizierung mit der Zubehörvorrichtung basierend auf den Authentifizierungsinformationen, wobei
das Durchführen der Bluetooth-Kopplung mit der Zubehörvorrichtung umfasst:
nachdem die interaktive Authentifizierung zwischen der elektronischen Vorrichtung (100) und der Zubehörvorrichtung erfolgreich ist, Durchführen der Bluetooth-Kopplung zwischen der elektronischen Vorrichtung (100) und der Zubehörvorrichtung.

13. Verfahren nach einem der Ansprüche 8 bis 12, wobei die elektronische Vorrichtung (100) und die andere elektronische Vorrichtung Vorrichtungen unter einem gleichen Konto sind.

## Revendications

1. Système, dans lequel le système comprend un premier dispositif électronique (A), un second dispositif électronique (B), et un dispositif accessoire, dans lequel
le premier dispositif électronique (A) est configuré pour afficher une première interface ;
le second dispositif électronique (B) est configuré pour afficher une seconde interface ;
le premier dispositif électronique (A) est également configuré pour envoyer des informations d'appairage du dispositif accessoire au second dispositif électronique (B) lors de la détection d'une première opération réalisée par un utilisateur sur la première interface ;
le second dispositif électronique (B) est également configuré pour réaliser un appairage Bluetooth avec le dispositif accessoire lors de la détection d'une opération par laquelle l'utilisateur sélectionne le dispositif accessoire ;
la première interface comprend une première liste de dispositifs, un dispositif dans la première liste de dispositifs est un dispositif qui a réalisé un appairage Bluetooth avec le premier dispositif électronique (A), et la première liste de dispositifs comprend le dispositif accessoire ;
la seconde interface comprend une seconde liste de dispositifs, un dispositif dans la seconde liste de dispositifs est un dispositif qui a réalisé un appairage Bluetooth avec le second dispositif électronique (B), et la seconde liste de dispositifs ne comprend pas le dispositif accessoire ;
le second dispositif électronique (B) est également configuré pour afficher le dispositif accessoire dans la seconde liste de dispositifs sur la base des informations d'appairage ;
l'opération par laquelle l'utilisateur sélectionne le dispositif accessoire comprend la sélection par l'utilisateur du dispositif accessoire dans la seconde liste de dispositifs ;
le premier dispositif électronique (A) est également configuré pour : en réponse à la première opération, envoyer un numéro de série correspondant aux informations d'appairage au second dispositif électronique (B) ; et
le second dispositif électronique (B) est également configuré pour : avant la réalisation d'un appairage Bluetooth avec le dispositif accessoire, déterminer que le numéro de série n'est pas utilisé.

2. Système selon la revendication 1, dans lequel le second dispositif électronique (B) est également configuré pour : avant la réalisation d'un appairage Bluetooth avec le dispositif accessoire, afficher des informations d'invite sur la seconde interface, dans lequel les informations d'invite sont utilisées pour indiquer que le second dispositif électronique (B) ne réalise pas d'appairage Bluetooth avec le dispositif accessoire ; et
masquer les informations d'invite lors de la finalisation de l'appairage Bluetooth avec le dispositif accessoire.

3. Système selon la revendication 1 ou 2, dans lequel le second dispositif électronique (B) est également configuré pour : avant la réalisation de l'appairage Bluetooth avec le dispositif accessoire, envoyer des informations d'indication au dispositif accessoire, dans lequel les informations d'indication sont utilisées pour indiquer au dispositif accessoire d'entrer dans un mode d'appairage disponible ; et
le dispositif accessoire est également configuré pour entrer dans le mode d'appairage disponible sur la base des informations d'indication.

4. Système selon l'une quelconque des revendications 1 à 3, dans lequel le premier dispositif électronique (A) est également configuré pour envoyer des informations de période de validité des informations d'appairage au second dispositif électronique (B) en réponse à la première opération, dans lequel les informations de période de validité sont utilisées pour indiquer une période de validité des informations d'appairage ; et
le second dispositif électronique (B) est également configuré pour : avant la réalisation d'un appairage Bluetooth avec le dispositif accessoire, déterminer que les informations d'appairage sont dans la période de validité.

5. Système selon l'une quelconque des revendications 1 à 4, dans lequel le premier dispositif électronique (A) est également configuré pour envoyer des informations d'authentification au second dispositif électronique (B) en réponse à la première opération, dans lequel les informations d'authentification sont des informations obtenues par le premier dispositif électronique (A) à partir du dispositif accessoire ; et
le second dispositif électronique (B) est également configuré pour : avant la réalisation d'un appairage Bluetooth avec le dispositif accessoire, réaliser une authentification interactive avec le dispositif accessoire sur la base des informations d'authentification ; et
après que l'authentification interactive avec le dispositif accessoire a réussi, réaliser un appairage Bluetooth avec le dispositif accessoire.

6. Système selon l'une quelconque des revendications 1 à 5, dans lequel le premier dispositif électronique (A) et le second dispositif électronique (B) sont des dispositifs sous un même compte.

7. Système selon l'une quelconque des revendications 1 à 6, dans lequel les informations d'appairage comprennent l'une ou plusieurs des informations suivantes : une adresse de contrôle d'accès au support MAC du dispositif accessoire, un identifiant de dispositif du dispositif accessoire ou des informations d'autorisation.

8. Procédé de partage d'informations, dans lequel le procédé est réalisé au niveau d'un dispositif électronique (100), et le procédé comprend :
l'affichage (S1002) d'une première interface ;
la réception d'informations d'appairage d'un dispositif accessoire envoyées par un autre dispositif électronique ; et
la réalisation (S1005) d'un appairage Bluetooth avec le dispositif accessoire lors de la détection d'une opération par laquelle un utilisateur sélectionne le dispositif accessoire, dans lequel la première interface comprend une liste de dispositifs, un dispositif dans la liste de dispositifs est un dispositif qui a réalisé un appairage Bluetooth avec le dispositif électronique (100), et la liste de dispositifs ne comprend pas le dispositif accessoire ;
et dans lequel le procédé comprend également :
l'affichage (S1004) du dispositif accessoire dans la liste de dispositifs sur la base des informations d'appairage ;
la réalisation (S1005) d'un appairage Bluetooth comprend également la détection de l'opération par laquelle l'utilisateur sélectionne le dispositif accessoire dans la liste de dispositifs ; et
avant la réalisation d'un appairage Bluetooth avec le dispositif accessoire, le procédé comprend également :
la réception d'un numéro de série correspondant aux informations d'appairage envoyées par l'autre dispositif électronique ; et
la détermination que le numéro de série n'est pas utilisé.

9. Procédé selon la revendication 8, dans lequel le procédé comprend également :
avant la réalisation d'un appairage Bluetooth avec le dispositif accessoire, l'affichage d'informations d'invite sur la première interface, dans lequel les informations d'invite sont utilisées pour indiquer que le dispositif électronique (100) ne réalise pas d'appairage Bluetooth avec le dispositif accessoire ; et
le masquage des informations d'invite lors de la finalisation de l'appairage Bluetooth avec le dispositif accessoire.

10. Procédé selon la revendication 8 ou 9, dans lequel, avant la réalisation d'un appairage Bluetooth avec le dispositif accessoire, le procédé comprend également :
l'envoi d'informations d'indication au dispositif accessoire, dans lequel les informations d'indication sont utilisées pour indiquer au dispositif accessoire d'entrer dans un mode d'appairage disponible.

11. Procédé selon l'une quelconque des revendications 8 à 10, dans lequel, avant la réalisation d'un appairage Bluetooth avec le dispositif accessoire, le procédé comprend également :
la réception d'informations de période de validité des informations d'appairage envoyées par l'autre dispositif électronique, dans lequel les informations de période de validité sont utilisées pour indiquer une période de validité des informations d'appairage ; et
la détermination que les informations d'appairage sont dans la période de validité.

12. Procédé selon l'une quelconque des revendications 8 à 11, dans lequel, avant la réalisation d'un appairage Bluetooth avec le dispositif accessoire, le procédé comprend également :
la réception d'informations d'authentification envoyées par l'autre dispositif électronique, dans lequel les informations d'authentification sont des informations obtenues par l'autre dispositif électronique à partir du dispositif accessoire ; et
la réalisation d'une authentification interactive avec le dispositif accessoire sur la base des informations d'authentification, dans lequel
la réalisation d'un appairage Bluetooth avec le dispositif accessoire comprend :
après que l'authentification interactive entre le dispositif électronique (100) et le dispositif accessoire a réussi, la réalisation d'un appairage Bluetooth entre le dispositif électronique (100) et le dispositif accessoire.

13. Procédé selon l'une quelconque des revendications 8 à 12, dans lequel le dispositif électronique (100) et l'autre dispositif électronique sont des dispositifs sous un même compte.
